**Europäisches Patentamt**

**European Patent Office**

**Office européen des brevets**

(19)

(11) Veröffentlichungsnummer: **0 324 503 B1**

(12) # EUROPÄISCHE PATENTSCHRIFT

(45) Veröffentlichungstag der Patentschrift:
07.08.91 Patentblatt 91/32

(51) Int. Cl.⁵: **B60N 2/26**

(21) Anmeldenummer: **89100584.5**

(22) Anmeldetag: **13.01.89**

(54) Universal-Automobilsitz für kleine und grosse Insassen, insbesondere Mitinsassen.

(30) Priorität: **14.01.88 DE 3800896**
**14.01.88 DE 8717170 U**

(43) Veröffentlichungstag der Anmeldung:
**19.07.89 Patentblatt 89/29**

(45) Bekanntmachung des Hinweises auf die
Patenterteilung:
**07.08.91 Patentblatt 91/32**

(84) Benannte Vertragsstaaten:
**AT BE CH DE ES FR GB GR IT LI LU NL SE**

(56) Entgegenhaltungen:
**DE-A- 3 221 604**
**DE-B- 2 709 005**
**DE-B- 2 823 529**
**DE-B- 2 825 329**
**DE-U- 8 717 170**
**US-A- 4 555 135**

(73) Patentinhaber: **Ambros, Richard**
**Biberacher Strasse 5**
**W-8960 Kempten (DE)**

(72) Erfinder: **Ambros, Richard**
**Biberacher Strasse 5**
**W-8960 Kempten (DE)**

EP 0 324 503 B1

## Beschreibung

Nach einer über hundert Jahre andauernden Entwicklung von Automobilen und dazu passenden Automobilsitzen ist in der Patentschrift US-A-4555135 (FREELAND) endlich ein Universal- Automobilsitz, der sowohl einem erwachsenen Mitinsassen, als auch einem Kind eine bequeme Sitzmöglichkeit bietet, dargestellt.

Eine in Fahrrichtung hochschwenkbare gepolsterte Sitzschale, unter der ein feststehend angebrachtes Kindersitzpolster untergebracht ist und auf deren Unterseite eine gepolsterte Kindersitzlehne aufgebracht ist, dient hier in vertikaler Schwenkstellung als Lehne für ein Kind und in horizontaler Schwenkstellung als Sitz für einen erwachsenen Mitinsassen, der hier wie üblich in Fahrrichtung sitzend auf der Sitzschale untergebracht ist, während ein Kind mit dem Rücken in Fahrrichtung sitzend bei hochgeschwenkter Sitzschale auf dem Kindersitzpolster plaziert ist, wo es bei einem möglichen Frontalaufprall über seinen Rücken und seinen Hinterkopf gegen die Kindersitzlehne angedrückt wird, so daß durch die Lehne verhindert ist, daß das Kind nach vorne gegen die Windschutzscheibe geschleudert wird.

Ein Abknicken des Kopfes nach hinten ist hier bei einem Frontalaufprall im Gegensatz zu einem üblichen Kindersitz, in dem ein Kind in Fahrrichtung sitzend untergebracht ist und wo dann der Kopf des Kindes bei einem entsprechend heftigen Frontalaufprall nach vorne abgeknickt wird, verhindert.

Ist ein, in erwähntem Universal- Automobilsitz untergebrachtes Kind nicht angegurtet, dann wird es sowohl unmittelbar nach einem entsprechend heftigen Frontalaufprall, als auch bei einem in der Regel weniger heftigen heckseitigen Aufprall frei beweglich nach hinten gegen eine übliche, für den Universalsitz vorgesehene gepolsterte Lehne geschleudert.

Die Gefahr speziell einer Halswirbelverletzung ist in diesem Fall jedoch nur dann weitgehend eingeschränkt, wenn das Kind im Moment des Aufprales auch ordnungsgemäß auf dem Kindersitz plaziert ist, was aber bei Kleinkindern und bei längerer Fahrdauer auch bei größeren Kindern nicht garantierbar ist, so daß ein nicht angegurtetes Kind auch in Bezug auf eine mögliche Halswirbelverletzung gesehen einer größeren Verletzungsgefahr ausgesetzt ist, wie ein angegurtetes Kind.

Ist ein Kind angegurtet, was gemäß erwähnter Patentschrift auch vorgesehen ist und was bei Säuglingen und Kleinkindern, sowie auch bei größeren Kindern ohne zusätzliche Aufsichtsperson unbedingt ratsam ist, dann wird der Kopf des angegurteten Kindes sowohl bei einem heckseitigen Aufprall aufgrund seiner Massenträgheit, als auch unmittelbar infolge eines Frontalaufpralles aufgrund eines sogenannten Peitschenhiebeffektes nach vorne abgeknickt, was zu einer Halswirbelverletzung und besonders bei Kleinkindern und Säuglingen, deren Halsmuskulatur relativ schwach und deren Kopf relativ groß ausgebildet ist, bei einem entsprechend heftigen Aufprall auch zu einer Querschnittslähmung führen kann.

Demgegenüber wird ein Kind, das in einem hier dargestellten erfindungsgemäßen Universal- Automobilsitz bei hochgeschwenkter Sitzschale ebenfalls mit dem Rücken in Fahrrichtung sitzend untergebracht ist, sowohl bei einem heckseitigen Aufprall, als auch unmittelbar nach einem Frontalaufprall samt Kindersitz über zwei schräg nach vorne hochgestellte Stützbügel, die hier für eine Schwenklagerung des Kindersitzes vorgesehen sind, nach hinten hochgeschwenkt und zeitlich etwas verzögert mit einer beim Anheben des Kindes durch dessen Massenträgheit verminderten Aufprallwucht gegen eine für den Universalsitz vorgesehene gepolsterte Lehne angeschwenkt, so daß dadurch bei einem angegurteten Kind ein Abknicken des Kopfes nach vorne bzw. eine Halswirbelverletzung verhindert ist.

Auch hat das Kind aufgrund der zeitlichen Verzögerung durch das Anheben des Kindersitzes etwas mehr Zeit, um einen Aufprall gegen die Lehne durch eine Reflexbewegung seiner Arme und durch unwillkürliches Anspannen bestimmter Muskelpartien erträglicher zu gestalten.

Für einen Säugling sollte der Aufprall durch ein Kissen, das vor der Lehne angebracht ist, zusätzlich gedämpft werden, wobei darauf zu achten ist, daß der Kindersitz in seiner vorgesehenen Schwenkbarkeit durch andere Mitinsassen nicht behindert ist. Ein weiterer Nachteil des eingangs erwähnten Universalsitzes gegenüber einem hier dargestellten Universalsitz ist, daß die gepolsterte Sitzschale zusammen mit dem darunter feststehend angebrachten Kindersitzpolster, dessen Höhe in etwa den nach unten abgewinkelten Unterschenkeln eines sitzenden Kindes angepaßt sein muß, in der Gesamt- Einbauhöhe unnötig viel Platz beansprucht, so daß unter dem Universalsitz relativ wenig Nutzraum verbleibt bzw. machbar ist, um einen Treibstofftank, ein Reserverad oder dgl. unterzubringen, wie dies bei den meisten Personenkraftwägen unter einem Rücksitz zumindest vorgesehen ist. Um die Einbauhöhe hier in einigermaßen erträglichen Grenzen zu halten, ist ein in der Sitzschale eingesetztes Sitzpolster nachteiligerweise nach hinten zu, wo die Belastung über das Gesäß eines darauf untergebrachten Mitinsassen zunimmt, in seiner Dicke verjüngt ausgebildet, damit das Kindersitzpolster nach vorne hin etwas hochgezogen werden kann bzw. um eine bequemere Auflage für das Gesäß eines auf dem Kindersitzpolster untergebrachten Kindes zu schaffen. Außerdem ist hier die Sitzfläche des in der Sitzschale eingesetzten Sitzpolsters zugunsten einer geringeren Gesamt- Einbauhöhe relativ flach gehalten, damit das Sitzpolster in seiner Dicke nach hinten zu nicht noch mehr verjüngt werden muß, was aber den Nachteil hat, daß ein auf der gepolsterten Sitzschale untergebrachter Insasse bei einem scharfen Bremsvorgang oder einem Frontalaufprall weniger in der Lage ist, seine Eigengeschwindigkeit über sein Gesäß zu verringern, so daß er entsprechend heftiger in vorgesehene Sicherheitsgurte hineingedrückt wird bzw. leichter nach vorne geschleudert werden kann, wenn er nicht angegurtet ist.

Bei einer Beseitigung letztgenannter Mängel müßte die Sitzfläche der gepolsterten Sitzschale nach oben hin verlagert werden, was dann aber den Sicherheitsabstand zwischen dem Kopf eines groß gewachsenen Mitinsassen und dem Dach des Fahrzeuges zusätzlich einschränken würde, so daß die Gefahr, daß der Insasse bei einem Aufprall mit dem Kopf gegen das Wagendach prallt, besonders wenn er nicht angegurtet ist, vergrößert wäre.

Demgegenüber ist ein hier dargestellter Universal-Automobilsitz in seiner erforderlichen Einbauhöhe wesentlich günstiger zu gestalten, da hier das Kindersitzpolster, unter dem vorne hochgezogenen Teil der Sitzschale untergebracht, in seiner Ruhelage der Neigung der Sitzschale angepaßt ist und erst bei Gebrauch, dem Gesäß eines sitzenden Kindes angepaßt, vom Kind aus betrachtet vorne hochgeschwenkt wird, wo dann das Kindersitzpolster durch einen abschwenkbar gelagerten vorderen Stützbügel in seiner Sitzschwenkstellung abstützbar ist und wodurch dann auch die erforderliche Sitzhöhe für die nach unten abgewinkelten Unterschenkel eines im Kindersitz untergebrachten Kindes bei einer relativ geringen Gesamt-Einbauhöhe des erfindungsgemäßen Universal-Automobilsitzes erzielbar ist.

Nachteilig bei eingangs erwähntem Universalsitz ist außerdem, daß weder ein Säugling, noch ein Kleinkind liegend darin untergebracht werden kann, was bei einem Universalsitz gemäß vorliegender Patentanmeldung durch eine in der Lehne des Sitzes eingesetzte, abschwenkbar gelagerte untere Rückenschale, auf deren Vorderseite ein unteres Rückenpolster eingesetzt ist und auf deren Rückseite ein Kopfpolster aufgebracht ist, ermöglicht ist. Dabei bildet das Kopfpolster, auf dem der Kopf eines liegend untergebrachten Kindes aufliegt, bei in Anschlagstellung abgeschwenkter Rückenschale zusammen mit dem Kindersitzpolster, das gegenüber seiner Sitzschwenkstellung in eine etwas flachere Liegeschwenkstellung abgeschwenkt ist, eine Liege für ein Baby, welches mit dem Gesäß in Fahrrichtung weisend bei etwas hochgelegten Unterschenkeln im Falle eines Frontalaufpralles gegen die in vertikaler Schwenkstellung befindliche gepolsterte Kindersitzlehne angedrückt wird, so daß der Aufprall des Babys über dessen Gesäß durch ein hier nicht dargestelltes Kissen oder dgl., welches unter den hochgelegten Unterschenkeln vor der Kinderlehne auf dem Kindersitzpolster abgelegt ist, abgeschwächt werden kann. Damit sich die für ein Baby vorgesehene Liege auch für die Unterbringung eines Kleinkindes zumindest eignet, ist in vorliegendem Ausführungsbeispiel ein Zwischenpolster vorgesehen, das zwischen dem Kopfpolster und dem Kindersitzpolster eingesetzt die Liege nach vorne hin verlängert.

Dabei muß das Kindersitzpolster, welches ebenso wie die Sitzschale schwenkbar um eine obere Querachse eines für den Kindersitz vorgesehenen hinteren Stützbügels gelagert ist, über eine Sitzwanne, die hier für die Schwenklagerung des Kindersitzes vorgesehen ist und die in Längsrichtung des Fahrzeuges verschiebbar gelagert ist, nach vorne hin verschoben werden, damit das Zwischenpolster eingesetzt werden kann.

Über die verschiebbar zwischen zwei Führungsböcken gelagerte Sitzwanne kann der Kindersitz in seiner Längsstellung auch einer hier vorgesehenen, aus der Lehne ausschwenkbaren Tischplatte angepaßt werden, so daß einem sitzend untergebrachten Kind in geeignetem Abstand eine Auflage für Comic-Hefte, Bilderbücher, Zeichenblätter, Puppen, Stofftiere, Wurstsemmeln, Fischsemmeln, Käsesemmeln, norddeutsche Brötchen und andere, möglichst nicht zu harte Gegenstände geboten ist.

Dabei wird die rückseitig der Lehne nach oben abgewinkelte Tischplatte, die mit ihrer Oberkante in Längsrichtung der Lehne verschiebbar gelagert ist und die mit ihrer Unterkante an der oberen Stirnseite der nach vorne abschwenkbaren unteren Rückenschale angelenkt ist, bei einem möglichen Aufprall automatisch in die Lehne eingeschwenkt wenn das Kind über den Kindersitz gegen das, bei ausgeschwenkter Tischplatte ebenfalls etwas ausgeschwenkte untere Rückenpolster der Schale bzw. der Lehne angeschwenkt wird, so daß also eine Verletzungsgefahr durch die Tischplatte ausgeschlossen ist.

Ein weiterer Vorteil des erfindungsgemäßen Universalsitzes ist, daß eine, aus einem Vordersitz mit zurückgeklappter Lehne und einem Rücksitz gebildete Liege durch eine am Vordersitz vorgesehene, nach vorne hin ausziehbare Sitzwanne verlängert werden kann, so daß die Füße einer auf der Beifahrerseite beispielsweise liegend untergebrachten, groß gewachsenen Beifahrerin nicht in der Luft hängen.

Dabei können die schwenkbar gelagerten Sitzschalen des Vorder-und Rücksitzes durch hier vorgesehene, nicht dargestellte Stützen in waagrechter Schwenkstellung abgestützt werden, so daß eine stufenlose horizontale Liegefläche gebildet ist.

Somit eignet sich ein erfindungsgemäßer Universal-Automobilsitz nicht nur für die Unterbringung eines in Fahrrichtung sitzenden Insassen und eines in Gegenfahrrichtung sitzenden Kindes, sondern auch für die Unterbringung eines liegenden Babys, eines liegenden Kleinkindes und einer liegenden Beifahrerperson, womit alle möglichen Voraussetzungen für

das Prädikat " Universellster Automobilsitz" erfüllt sein dürften, zumal hier auch Tieren auf einer Baby- oder Kleinkindliege durch die hochgeschwenkte Sitzschale eine erhöhte Sicherheit geboten ist. Auch ist durch die hochgeschwenkte Sitzschale verhindert, daß auf einer Baby- oder Kleinkindliege abgelegte Gegenstände bei einem scharfen Bremsvorgang oder bei einem Frontalaufprall nach vorne geschleudert und beschädigt werden bzw. selbst Schaden anrichten.

Ein Universal- Automobilsitz nach dem RIAM-Sicherheitssystem ist also nicht nur praktisch, sondern auch äußerst bequem. (RIAM- äh- ist die Abkürzung von Right Infallible Auto- Mobile).

Eine für die Lagerung des Universalsitzes vorgesehene Sitzwanne ist hier mit vier beidseits angeordneten Laufrollen ausgestattet und in Längsrichtung des Fahrzeuges verschiebbar auf Laufschienen geführt, wobei die Laufschienen seitlich der Sitzwannen bei einem Rücksitz eines PKW's beispielsweise auf einem üblichen Sockel und bei einem Beifahrersitz auf einem üblichen, in Längsrichtung verschiebbar gelagerten Untergestell für den Sitz befestigt sind, wo sie gleichzeitig für die Befestigung seitlich angeordneter Führungsböcke dienen.

Die Führungsböcke weisen auf ihrer Unterseite einen im Querschnitt rechteckig ausgebildeten, längsgerichteten Befestigungsflansch ähnlicher einer Flachschiene auf, der jeweils mit seiner der Sitzwanne zugewandten Außenseite eine Anlauffläche gegen die entsprechenden Laufrollen einer Sitzwanne bildet, so daß dadurch die Längsführung der Sitzwanne mit etwas seitlichem Spiel gewährleistet ist.

Die den Abschluß eines Sitzes bildenden, zueinander spiegelbildlich ausgeführten äußeren Führungsböcke entsprechen hier in ihrer Breite der halben Breite eines zwischen den Sitzen einer Rücksitzbank angeordneten Führungsbockes, der im Qerschnitt betrachtet in seiner Ausführung einem linken und einem rechten äußeren Führungsbock entspricht.

Für eine aus drei Sitzen bestehende Sitzbank sind also zwei Mittelböcke und zwei Außenböcke und für einen vorderen Sitz zwei Außenböcke erforderlich, wobei die Außenböcke jeweils spiegelbildlich zueinander ausgebildet sind.

Auf der Oberseite der Böcke sind nun seitliche Sitzpolster in entsprechend ausgebildeten, an den Böcken angeformten Sitzschalen eingesetzt, wobei die den seitlichen Abschluß eines Sitzes bildenden seitlichen Sitzpolster nur halb so breit sind wie die zwischen den Sitzen einer Sitzbank vorgesehenen mittleren seitlichen Sitzpolster.

Für die Lehne eines Universalsitzes ist pro Sitz ein unteres und ein oberes Rückenpolster vorgesehen, die in ihrer Breite schmäler gehalten sind wie das hochklappbare Sitzpolster, damit eine für das Kind vorgesehene, ausschwenkbare Tischplatte in ihrer Gebrauchslage die Ellenbogenfreiheit eines erwachsenen Mitinsassen nicht zu sehr beengt.

Dabei ist die Tischplatte etwas schmäler wie das ausschwenkbar gelagerte untere Rückenpolster, für das eine schwenkbar um eine untere Querachse der Lehne gelagerte Schale vorgesehen ist, an der die Tischplatte angelenkt ist und über welche die Tischplatte in Gebrauchslage ausschwenkbar ist.

Auf der Rückseite dieser Schale, in welche das untere Rückenpolster eingesetzt ist, ist nun auch noch ein Kopfpolster aufgebracht, das im abgeschwenkten Zustand als Auflage für den Kopf eines Babys oder eines Kleinkindes dient.

Durch die vorgesehene Breite der Rückenpolster ist also auch die Breite dieses Kopfpolsters und außerdem auch noch die Breite einer schwenkbar um eine obere Querachse der Lehne gelagerten Kopfstütze bestimmt.

Um nun auch die Anlagefläche der Lehne zu verbreitern, sind seitliche Rückenpolster vorgesehen, die bei einer Rücksitzlehne in entsprechend ausgebildeten Schalen seitlicher Rückenteile eingesetzt und bei einer Vordersitzlehne eines SiAutomobiles plan auf den seitlichen Rückenteilen aufgebracht sind, da hier jeweils ein Getriebemotor für das Wiederhochschwenken eines Schutzbügels innerhalb eines seitlichen Rückenteiles untergebracht ist.

Die den Abschluß einer Lehne bildenden äußeren seitlichen Rückenteile sind hier nur halb so breit ausgebildet wie die mittleren seitlichen Rückenteile einer Rücksitzlehne, wobei die seitlichen Rückenteile einer Vordersitzlehne auch etwas breiter ausgebildet werden können, so daß der vorgesehene Getriebemotor für das Wiederhochschwenken des Schutzbügels ausreichend groß dimensioniert werden kann und innerhalb eines seitlichen Rückenteiles der Vordersitzlehne unterbringbar ist.

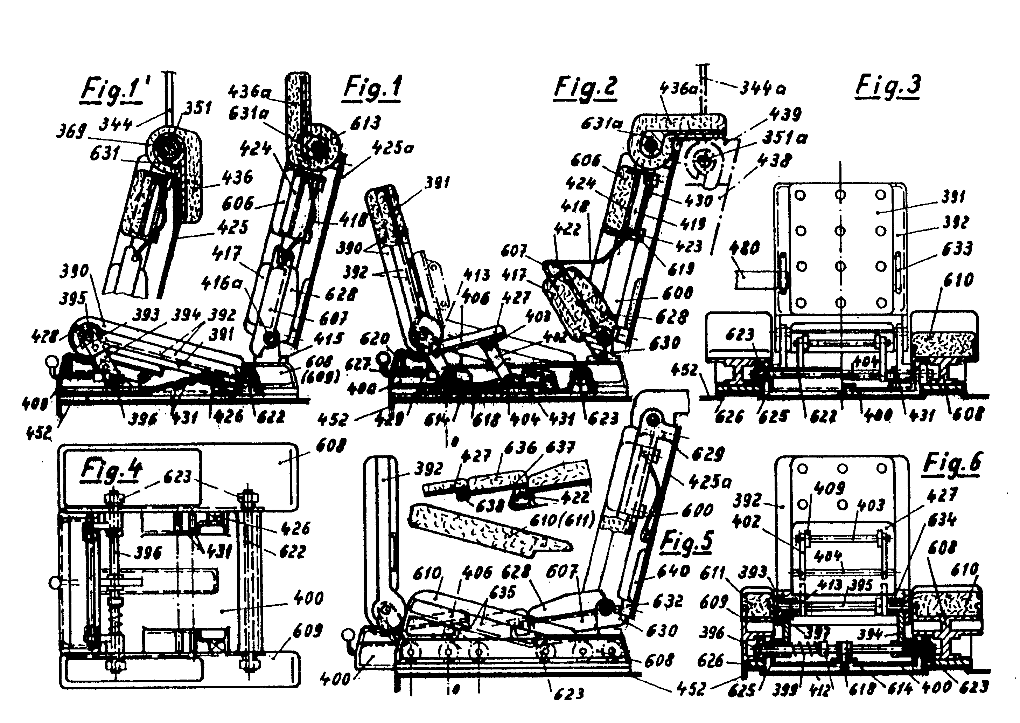

In den Darstellungen Fig. 1 bis 14 ist ein Universal-Automobilsitz dargestellt, der sowohl für die Unterbringung von Babys mit und ohne Babytasche, als auch zum Liegen für Kleinkinder, sowie zum Sitzen für Kinder und Erwachsene geeignet ist. Eine in Fahrrichtung hochschwenkbar um eine obere Querachse 395 eines hinteren Stützbügels gelagerte Sitzschale 392, in die ein Sitzpolster 390 für eine erwachsene Person eingesetzt ist und auf deren Unterseite eine gepolsterte Kinderlehne 391 aufgebracht ist (siehe Fig. 1), dient hier im hochgeklappten Zustand als Lehne für ein Kind, wobei das Kind mit dem Rücken in Fahrrichtung auf einem Klappsitz untergebracht ist (siehe Fig. 2), der aus einem ebenfalls schwenkbar um die obere Querachse des hinteren Stützbügels gelagerten Sitzplatte 427 mit einem darauf befestigten Kindersitzpolster 406 besteht und der auf seiner Unterseite auch noch einen vorderen Stützbügel aufweist, der mit seiner oberen Querachse 403 schwenkbar an der Sitzplatte gelagert ist, während seine untere Querachse in Rasten 431 der Sitzwanne 400 eingesetzt ist.

Für die Verschiebbarkeit der Sitzwanne in Längsrichtung eines Fahrzeuges sind vier Laufrollen 623 vorgesehen (siehe Fig. 4), von denen die beiden hinteren Laufrollen an den äußeren Enden einer unteren Querachse 396 des hinteren Stützbügels lose drehbar aufgesetzt sind (siehe Fig. 6).

Dabei ist die Querachse durch entsprechend ausgebildete Bohrungen in beidseits hochgezogenen Außenwänden 625 der Sitzwanne hindurchgeführt, so daß die Laufrollen, seitlich der Sitzwanne angeordnet, gleichzeitig zur Lagerung der unteren Querachse dienen, während die Sitzwanne an der Achse gelagert ist. Für die beiden vorderen Laufrollen ist eine separate Querachse 622 vorgesehen (siehe Fig. 3 links), wobei hier der vordere Teil des Wannenbodens im Bereich der Achse hochgezogen ist und mit seiner Unterseite auf der Achse aufliegt (siehe auch Fig. 1). Für den hinteren Stützbügel ist eine Anschlagfläche 429 an der Sitzwanne angeformt (siehe Fig. 2), wobei die Anschlagfläche, sowie die Rasten 431 für die Schwenkbegrenzung des Klappsitzes so angeordnet sind, daß beide Stützen in dargestellter Anschlagstellung des Kindersitzes schräg in Fahrrichtung hochgestellt sind, so daß der Sitz bei einem heckseitigen Aufprall in Gegenfahrrichtung hochgeschwenkt wird.

Während für Babys und Kleinkinder auch eine Liegefläche gebildet werden kann, indem ein an einer unteren Querachse 416 bzw. 416a einer Lehne schwenkbar gelagertes Kopfpolster 628 hier im abgeschwenkten Zustand eine Auflage für den Kopf des Kindes bildet (siehe Fig. 5) und indem das Kindersitzpolster 406 und gegebenenfalls ein zusätzlich eingesetztes Zwischenpolster 636 (siehe Fig. 5 oben) die Liegefläche vervollständigen, ist für ein auf dem Kindersitz untergebrachtes sitzendes Kind eine ausschwenkbare Tischplatte 418 vorgesehen (siehe Fig. 2).

Für die Gebrauchslage des Kindersitzes als Liege ist hier für den vorderen Stützbügel des Klappsitzes auch noch eine vordere Raststellung in der Sitzwanne vorgesehen (siehe Fig. 2), in der dann das Sitzpolster 406 in eine untere flachere Schwenkstellung gebracht ist (siehe Fig. 5).

Für die Arretierung der Sitzwanne in ihrer jeweiligen Längsstellung ist eine lose schwenkbar auf der unteren Querachse des hinteren Stützbügels gelagerte Klinke 614 vorgesehen (siehe Fig. 2), die mittels einer Zugfeder 620 in Eingriff zu einer Zahnstange 618 gehalten ist, wobei die Zahnstange hier auf einem üblichen Sockel 452 einer Rücksitzbank befestigt ist.

Bei einem Vordersitz ist statt eines Sockels eine Deckplatte auf dem Untergestell des Sitzes angebracht, so daß in der folgenden Beschreibung zweckmäßigerweise auch der Sockel als Deckplatte bezeichnet ist.

Für einen Fahrersitz, der ja nicht gleichzeitig als Kindersitz ausgebildet sein muß, ist im Prinzip dieselbe Sitzschale 392 in Anwendung gebracht wie für einen Mitfahrersitz, wobei der Klappsitz hier entfällt, so daß die Sitzschale hier im Bereich der nicht erforderlichen gepolsterten Kinderlehne 391 etwas vertieft werden kann, um ein etwas dickeres Sitzpolster 390 einsetzen zu können (siehe Fig. 1).

Dabei ist die vorgesehene Schwenkbarkeit der Sitzschale bei der Erstellung eines Liegesitzes von Vorteil, um das Sitzpolster 390 der nach hinten zurückgeklappten Lehne anzupassen, so daß ein stufenloser Übergang geschaffen ist.

Um die Sitzschale in der entsprechenden Schwenkstellung festzuhalten, sind zweckmäßigerweise an Stelle der in Fig. 3 dargestellten Befestigungsbügel 633 für einen Haltegurt 480 zwei schwenkbar gelagerte, hier nicht dargestellte Stützen an der Unterseite der Sitzschale befestigt, wobei die Schwenklagerung der Stützen zweckmäßigerweise über den Rasten 431 der Sitzwanne 400 angeordnet ist (siehe Fig. 1), so daß die mit einem Lagerauge ausgestatteten, stabförmig ausgebildeten Stützen in abgeschwenkter Stellung mit ihrem unteren Schwenkende in die Rasten einsetzbar sind. Als Seitenteile für den Fahrersitz sind dann dieselben Außenböcke 609 und seitlichen Sitzpolster 611 verwendbar wie für einen Mitfahrersitz (siehe Fig. 6), wobei die seitlichen Böcke und Sitzpolster bei einem Vordersitz gegebenenfalls auch breiter ausgebildet sein können wie die Außenböcke bzw. Außenpolster einer Rücksitzbank.

Für die Lehne ist bei einem Fahrersitz zweckmäßigerweise statt der beiden Rückenpolster 417 u. 606 (siehe Fig. 1) ein durchgehendes, hier nicht dargestelltes Polster in einer entsprechend ausgebildeten, fest anmontierten Schale eingesetzt, wobei diese Schale ähnlich einer oberen Rückenschale 424 (siehe Fig. 8) an den seitlichen Rückenteilen 388 der Fahrerlehne befestigt ist.

Dabei ist die Rückenschale eines Fahrersitzes zweckmäßigerweise etwas tiefer ausgebildet wie die obere Rückenschale eines Mitfahrersitzes (siehe Fig. 2), damit ein etwas dickeres Polster einsetzbar ist, da sich ein Fahrer während der Fahrt nicht so recken und strecken kann wie ein Mitfahrer.

Fig. 1 zeigt einen Universal-Automobilsitz in seiner Gebrauchsstellung für einen erwachsenen Mitfahrer.

Während eine in Fig. 1' dargestellte Kopfstütze 436 bei einem Beifahrer- und auch Fahrersitz soweit nach hinten abschwenkbar ist, bis ihr tangential abstehendes Kopfteil vertikal nach unten ragt (bei normaler Schwenkstellung der Lehne), ist die Schwenkbarkeit einer Kopfstütze 436a bei einer Rücksitzbank eines SiPKW's durch ein Lagergehäuse 439 für die Schwenklagerung eines hinteren Schutzbügels 351a, 344a begrenzt (siehe Fig. 2), wo dann das Kopfteil horizontal aufliegt.

Fig. 2 zeigt einen Universal- Automobilsitz in seiner Gebrauchsstellung als Kindersitz mit einer in Gebrauchslage ausgeschwenkten Tischplatte 418.

Eine untere Rückenschale 607, die hier für die untere Schwenklagerung der nach oben abgewinkelten Tischplatte dient, ist zweckmäßigerweise schmäler ausgebildet wie eine für das Kind vorgesehene Sitzplatte 427 mit einem darauf befestigten Kindersitzpolster 406, so daß die Knie'e eines Kindes noch bequem seitlich der Rückenschale unterbringbar sind, wenn der Kindersitz entsprechend nach vorne angestellt ist.

Fig. 3 zeigt einen aufgeklappten Kindersitz in Vorderansicht mit seiner auf der Unterseite einer Sitzschale 392 befestigten, gepolsterten Kinderlehne 391.

Fig. 4 zeigt eine Sitzwanne 400 in Draufsicht mit ihren 4 Laufrollen 623, für deren Lagerung eine untere Querachse 396 eines hinteren Stützbügels für den Kindersitz, sowie eine separate Querachse 622 auf der Vorderseite der Sitzwanne vorgesehen sind.

Fig. 5 zeigt einen Universal- Automobilsitz in seiner Gebrauchslage als Liege für ein Baby bzw. für ein Kleinkind, wobei hier der Kindersitz mit seinem in eine untere Schwenk- bzw. Raststellung gebrachten Sitzpolster 406 gegen ein Kopfpolster 628 angestellt (siehe strichpunktierte Darstellung des Kindersitzpolsters 406) als Liege für ein Baby ohne Babytasche dient, während für ein Baby mit Babytasche die Sitzwanne 400 in eine hier dargestellte hintere Anschlagstellung gebracht ist, wo dann die Babytasche fußseitig auf dem ausgezogenen Kindersitzpolster und kopfseitig auf dem entsprechend abgeflachten oberen Teil des Kopfpolsters 628 plan aufliegt.

Für die Vervollständigung der Liegefläche bei der Unterbringung eines Kleinkindes ist ein separates Zwischenpolster 636 zwischen dem Kindersitzpolster und dem Kopfpolster eingesetzt (siehe Fig. 5 oben). Als Schutz für den Kopf ist hier ein Kopfschutzpolster 640 auf der Innenseite einer Rückwand 425 bzw. 425a befestigt.

Fig. 6 zeigt einen Kindersitz in Vorderansicht mit hochgeklappter Sitzplatte 427, wobei hier der aus zwei Querachsen 395 u. 396 und zwei Stützen 394 bestehende hintere Stützbügel des Kindersitzes im Schnitt dargestellt ist.

Zwecks Arretierung der Sitzschale 392 in ihrer Gebrauchs-Schwenklage als Lehne ist eine der beiden Stützen axial verschiebbar zu den Querachsen gelagert und durch eine Druckfeder 399 über einen axial nach außen abstehenden Rastbolzen 397 in einer Einraststellung zu einer der beiden Lagerflansche 393 der Sitzschale 392 festgehalten (siehe auch Fig. 2).

Fig. 7 zeigt eine 3-teilige Rücksitzlehne in Vorderansicht mit jeweils einem unter einer Kopfstütze 436a vorgesehenen unteren Rückenpolster 417 und einem oberen Rückenpolster 606, die in einer unteren Rückenschale 607 bzw. in einer oberen Rückenschale 424 eingesetzt sind.

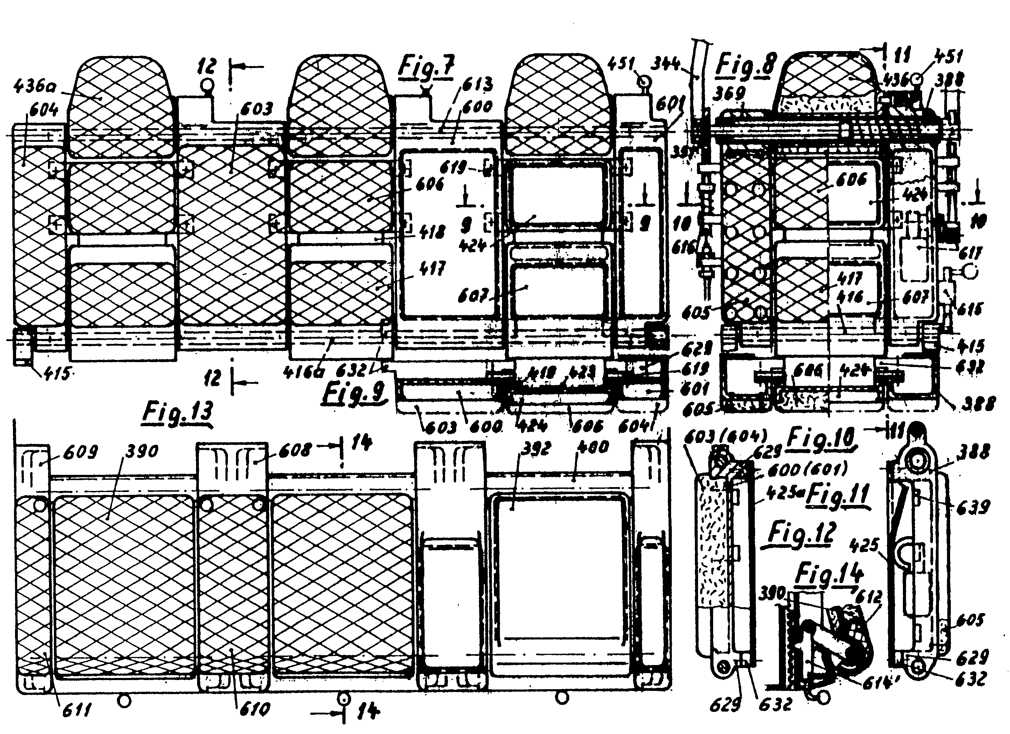

Seitlich der Rückenpolster sind zwischen den Sitzpolstern 390 (siehe Fig. 13) bzw. in der Mitte der Lehne seitliche Rückenpolster 603 in seitlichen Rückenschalen 600 eingesetzt, während auf den Außenseiten der Lehne seitliche Rückenpolster 604 vorgesehen sind, die nur halb so breit sind wie die mittleren seitlichen Rückenpolster und die in spiegelbildlich ausgebildeten äußeren seitlichen Rückenschalen 601 eingesetzt sind.

Fig. 8 zeigt eine Beifahrersitzlehne, welche dieselben Rückenschalen 607 u. 424, sowie dieselben Rückenpolster 417 u. 606 aufweist wie eine Rücksitzlehne, während bei einer Fahrersitzlehne nur eine einzige, hier nicht dargestellte Rückenschale mit einem durchgehenden Rückenpolster, das zumindest in der Dicke einem mittleren seitlichen Rückenpolster 603 entspricht (siehe Fig. 7 u. 12) und in etwa gleich breit und hoch ausgebildet ist, vorgesehen ist.

Zwecks Verbreiterung der Lehne sind hier seitliche Rückenpolster 605 plan auf im Querschnitt U-förmig ausgebildeten seitlichen Rückenteilen 388 aufgebracht (siehe Fig. 10), wobei die seitlichen Rückenpolster hier in ihrer Dicke zweckmäßigerweise entgegen der Darstellung so bemessen sind, daß eine sogenannte Schalenform gebildet ist.

Eine Kopfstütze 436 ist hier schwenkbar um ein Rohr 369, durch das eine Querachse 351 eines vorderen Schutzbügels 351, 344 hindurchgeführt ist, gelagert.

Fig. 9 zeigt gemäß Schnitt 9-9 zu Fig. 7 eine obere Rückenschale 424 im Querschnitt.

Auf der Rückseite der rechteckig ausgebildeten Schale sind beidseits Führungsnuten 419 für eine obere Querachse 423 der Tischplatte 418 angeformt (siehe Fig. 2), wobei an den nach innen gezogenen, die Rückseite der Führungsnuten bildenden Schenkeln der Schale beidseits nach außen abstehende Laschen 619 angeformt sind, die zur Befestigung der Schale an den seitlichen Rückenschalen 600 bzw. 601 dienen.

Fig. 10 zeigt gemäß Schnitt 10-10 zu Fig. 8 eine Beifahrersitzlehne im Querschnitt.

Fig. 11 zeigt gemäß Schnitt 11-11 zu Fig. 8 die Innenansicht eines seitlichen Rückenteiles 388 für eine Beifahrersitzlehne, die spiegelbildlich gesehen auch für eine Fahrersitzlehne zutreffend ist.

Fig. 12 zeigt gemäß Schnitt 12-12 zu Fig. 7 eine seitliche Rückenschale 600 (bzw. 601) mit einem in die Schale eingesetzten seitlichen Rückenpolster 603 (bzw. 604) im Längsschnitt.

Fig. 13 zeigt in Draufsicht eine 3-teilige Rücksitzbank mit nach vorne hochklappbaren Sitzpolstern 390, deren Sitzfläche durch seitliche Sitzpolster 610 u. 611 verbreitert ist.

Für die Aufnahme der seitlichen Sitzpolster, die an ihrer unteren Rückseite nach oben abgesetzt sind (siehe Fig. 5 oben), sind seitliche Führungsböcke 608 u. 609 vorgesehen, wobei die Führungsböcke jeweils mit ihrer vorderen Oberseite eine Schale 635 bilden (siehe Fig. 5), deren Bodenfläche entsprechend einer vorgesehenen Sitzneigung schräg nach hinten geneigt ist und im Laufbereich der hinteren Laufrollen der Sitzwanne 400 vertikal hochgezogen in eine horizontal nach hinten gezogene obere Abschlußwandung übergeht, so daß die Sitzpolster im hinteren Bereich plan auf dieser Wandung aufliegen, während sie im vorderen Bereich jeweils in der Schale eingesetzt sind.

Fig. 14 zeigt gemäß Schnitt 14-14 zu Fig. 13 den vorderen Teil eines Sitzpolsters 390 im Längsschnitt, wobei hier im Bereich der um den hinteren Stützbügel herumgezogenen Bodenplatte der für das Polster vorgesehenen Sitzschale ein an der Bodenplatte befestigbares Formstück 612 als Polsterfüllung vorgesehen ist. Eine hier dargestellte einarmig ausgebildete Klinke 614' ist hier lediglich als Variante zu einer beidarmig ausgebildeten Klinke 614 (siehe Fig. 2) aufgezeigt und eher nachteilig.

Fig. 1 bis 14 zeigt einen Universal-Automobilsitz, der sowohl einer erwachsenen Person (siehe Fig. 1), als auch einem Kind (siehe Fig. 2) eine bequeme Sitzmöglichkeit bietet und der außerdem auch noch als Liege für ein Baby oder ein Kleinkind dient (siehe Fig. 5). Dabei kann der Universalsitz sowohl als Beifahrersitz (siehe Fig. 1', Fig. 6 links und Fig. 8), als auch innerhalb einer Rücksitzbank (siehe Fig. 2, Fig. 3, Fig. 7 u. Fig. 13) in Anwendung gebracht werden. Aus den Bauteilen eines Universalsitzes kann auch ein Fahrersitz erstellt werden, wobei hier ein in Fig. 2 dargestellter Klappsitz 406, 427 für ein Kind mit seinem vorderen Stützbügel 402, 403, 404 entfällt, während für die Lehne eines Fahrersitzes statt der beiden Rückenpolster 417 u. 606 (siehe Fig. 2) zusätzlich ein hier nicht dargestelltes, durchgehendes Rückenpolster erforderlich ist, das in einer entsprechend ausgebildeten Schale eingesetzt ist, die dann entsprechend einer in Fig. 2 dargestellten oberen Rückenschale 424 fest anmontiert ist.

Die vorgesehene Verschiebbarkeit einer für den Sitz vorgesehenen Sitzwanne 400 auf Rollen 623 (siehe Fig. 2 u. 4) dient dann bei einem Fahrersitz bei der Erstellung einer üblichen Liege durch Zurückklappen der Lehne beispielsweise zur Verlängerung der Liegefläche nach unten, so daß die Füße einer groß gewachsenen Person nicht in der Luft hängen.

Bei der Erstellung einer üblichen Liege ist dann auch die vorgesehene Schwenklagerung einer Sitzschale 392 um eine obere Querachse 395 eines hinteren Stützbügels von Vorteil (siehe Fig. 1), um ein in der Sitzschale eingesetztes Sitzpolster 390 in seiner Schräglage der zurückgeklappten Lehne anzupassen, wobei dann beidseits der Sitzschale schwenkbar gelagerte Stützen an der Unterseite der Schale befestigt sind, so daß die hier nicht dargestellten Stützen mit ihrem unteren Schwenkende in eines der beiden Rasterpaare 431 (siehe Fig. 1) einsetzbar sind und das Sitzpolster in der entsprechenden Schwenkstellung festhalten.

Von Vorteil sind die erwähnten Stützen auch bei einer Rücksitzbank, deren Sitzpolster 390 dann hinten hochstellbar sind, so daß sie sich als Kopfpolster wesentlich besser eignen wie in ihrer normalen Schwenkstellung als Sitzpolster.

Somit eignet sich ein SiPKW auch ausgezeichnet zum Übernachten, sodaß man auf ein Hotelzimmer gar nicht mehr angewiesen ist. Bei der Anbringung erwähnter Stützen ist dann zweckmäßigerweise auf die in Fig. 3 strichpunktiert angedeuteten Befestigungsbügel 633 für einen Haltegurt 480 zu verzichten, sodaß an deren Stelle die Stützen anbringbar sind und zwar zweckmäßigerweise so, daß deren Schwenkende eingeschwenkt zur oberen Querachse 395 des hinteren Stützbügels hin gerichtet ist.

Ein Kind, das während der Fahrt nicht ruhig sitzen bleibt, kann man ja auch mit einem Gurt, der um eine hier vorgesehene Kinderlehne 391 bzw. um die Sitzschale 392 herumgezogen ist, festschnallen.

Die Sitzschale 392 besteht aus einer rechteckig ausgebildeten Bodenplatte, die seitlich und hinten hochgezogene Wandungen aufweist und die auf ihrer Vorderseite kreisbogenförmig um eine darunterliegende, für die Schwenklagerung der Sitzschale vorgesehene obere Querachse 395 eines hinteren, aus zwei Querachsen 395 u. 396 und zwei Stützen bestehenden Stützbügels für einen Kinderklappsitz herumgezogen ist (siehe Fig. 1).

Dabei ist die Vorderkante der Bodenplatte so abgewinkelt, daß ihr abgewinkeltes Ende mit der Unterseite eine Anschlagfläche 428 gegen die beiden Stützen 394 des Stützbügels in einer Gebrauchsschwenkstellung der Sitzschale als Lehne bildet.

Für die Schwenklagerung der Sitzschale um die obere Querachse 395 des hinteren Stützbügels sind an ihrer Unterseite beidseits Lagerflansche 393 angeformt, wobei die Lagerflansche entsprechende Bohrungen aufweisen, durch welche die Querachse hindurchgeführt ist (siehe Fig. 6).

Während die obere Querachse 395 des Stützbügels seitlich bündig mit den Lagerflanschen 393 der Sitzschale abschließt, ist die untere, parallel dazu angeordnete Querachse 396 des Stützbügels durch entsprechende Bohrungen in seitlich hochgezogenen Wandungen 625 einer Sitzwanne 400 hindurchgeführt, wo an ihren äußeren Enden die beiden hinteren Laufrollen 623 von insgesamt 4 Laufrollen (siehe Fig. 4) lose drehbar aufgebracht sind, so daß also die Laufrollen auch zur Lagerung des hinteren Stützbügels dienen, während die Sitzwanne an der unteren Querachse gelagert ist.

Durch übliche Sicherungsringe an den Enden der unteren Querachse sind sowohl die Laufrollen, als auch die Querachse mit etwas Spiel axial fixiert.

Während hier eine Stütze 394 drehfest und axial fixiert auf der unteren Querachse aufgesetzt und mit der oberen Querachse verstiftet ist, ist die andere Stütze axial verschiebbar zu den Querachsen gelagert und über eine Paßfeder in drehfeste Verbindung zur unteren Querachse gebracht.

Dabei wird die axial verschiebbar gelagerte Stütze durch eine zwischen der Stütze und einem Stellring 412 wirksam auf der unteren Querachse aufgebrachte Druckfeder 399 nach außen gegen einen der beiden außerhalb der Stützen angeordneten Lagerflansche 393 der Sitzschale 392 angedrückt.

Zwischen diesem Lagerflansch und der axial verschiebbar gelagerten Stütze ist nun eine übliche Einrasteinrichtung gebildet, indem die Stütze mit einem axial nach außen abstehenden Rastbolzen 397 ausgestattet ist, der in einer Gebrauchsschwenkstellung der Sitzschale als Lehne bzw. in einer durch die Anschlagfläche 428 der Sitzschale bestimmten Anschlagschwenkstellung durch die Druckfeder 399 in einer an der Innenseite des Lagerflansches vorgesehenen Vertiefung einrastbar ist, so daß die Sitzschale in ihrer Gebrauchslage als Lehne ausreichend festgehalten ist. Zweckmäßigerweise ist auch eine entsprechende Einrastmöglichkeit in einer in Fig. 5 dargestellten vertikalen Schwenkstellung der Sitzschale bei ausgezogener Sitzwanne 400 vorgesehen.

Dabei ist jedoch durch einen zwischen dem Lagerflansch und der Stütze vorgesehenen, hier nicht dargestellten Festanschlag verhindert, daß die Sitzschale bei einem heckseitigen Aufprall auf ein im Universalsitz untergebrachtes Baby oder Kleinkind kippt, so daß also die Stütze entgegen der Krafteinwirkung der Druckfeder 399 erst nach innen verschoben werden muß, bevor die Sitzschale dann wieder in ihre Gebrauchslage als Sitz gebracht werden kann.

Die Verschiebbarkeit der Stütze nach innen ist hier durch ein für die Lagerung der oberen Querachse vorgesehenes Lagerauge 634 begrenzt, wobei das Lagerauge gegenüber einer Lagerlasche 413 eines Klappsitzes entsprechend abgestimmt ist.

Als Anschlag für den hinteren Stützbügel in seiner in Fig. 2 dargestellten Normalschwenkstellung ist an der Sitzwanne 400 eine Anschlagfläche 429 angeformt, die so angebracht ist, daß die obere Querachse des Bügels gegenüber der unteren Querachse schräg in Fahrrichtung hochgestellt ist, so daß also der Bügel von seiner Normalstellung aus in Gegenfahrrichtung hochschwenkbar ist.

Dabei ist die vom Boden der Sitzwanne hochgezogene Rückwand der Wanne oben nach vorne abgewinkelt und unterhalb der oberen Querachse des hinteren Stützbügels kreisbogenförmig um die Achse bzw. um die rund ausgebildeten Lagerflansche 393 der Sitzschale herumgezogen, wo dann die Wandung an ihrem vorderen Ende in Längsrichtung der Stützen des Stützbügels nach unten abgewinkelt eine Anschlagfläche 429 gegen die Stützen bildet.

Für die beiden vorderen Laufrollen 623 der Sitzwanne ist eine separate Querachse 622 vorgesehen (siehe Fig. 3 links), wobei für diese Querachse ebenfalls entsprechende Bohrungen für ihre Lagerung in den seitlich hochgezogenen Wandungen 625 der Wanne angebracht sind, so daß also die vorderen Laufrollen genau gleich wie die hinteren Rollen an den nach außen abstehenden Enden der Achse gelagert sind.

Der Wannenboden ist hier im Bereich der vorderen Querachse 622 nach oben und um die Achse herumgezogen (siehe Fig. 1), wo er auf der Achse aufliegend eine V-förmige, nach unten offene Rinne bildet und mit seiner wieder nach unten gezogenen Wandung die Vorderwand der Wanne bildet.

Für die Laufrollen sind hier im Querschnitt rechteckig ausgebildete, auf einer Deckplatte 452 eines Unterbaues befestigte Laufschienen 626 vorgesehen (siehe Fig. 3 u. 6), auf denen seitlich der Sitzwannen Führungsböcke 608 bzw. 609 aufgeschraubt sind. Dabei entspricht ein zwischen den Sitzwannen einer Sitzbank vorgesehener mittlerer Führungsbock 608 im Querschnitt betrachtet zwei spiegelbildlich ausgeführten äußeren Führungsböcken 609 einer Sitzbank bzw. eines Einzelsitzes (siehe Fig. 6).

Die Führungböcke weisen auf ihrer Unterseite einen im Querschnitt rechteckig ausgebildeten, längsgerichteten Befestigungsflansch auf, der jeweils mit seiner den Laufrollen zugewandten Außenseite eine Anlauffläche für die Laufrollen bildet.

Oberhalb der Laufrollen ist jeweils eine horizontal nach außen abstehende Wandung an eine vom Befestigungsflansch vertikal nach oben abstehende Wandung angeformt, wobei die horizontal abstehende Wandung jeweils mit geringem Spiel über die Laufrollen, sowie über eine der beiden seitlich hochgezogenen Wandungen 625 der Sitzwanne hinweggezogen ist (siehe Fig. 6).

Dadurch sind die Laufrollen vor grober Verunreinigung geschützt und auch gewährleistet, daß herabfallende Gegenstände in die Sitzwanne fallen und nicht auf die Schienen.

Die horizontal nach außen gezogene Wandung ist auf der Vorder- u. Rückseite eines Bockes nach unten gezogen, so daß jeweils ein Anschlag gegen die Laufrollen bzw. ein vorderer und ein hinterer Anschlag für die Verschiebbarkeit der Sitzwanne gebildet ist (siehe Fig. 5).

Dabei ist der auf der Rückseite einer Sitzwanne nach unten gezogene Steg für den hinteren Anschlag soweit nach innen abgesetzt, daß die Wanne auch nach hinten ausziehbar ist (siehe Fig. 5), während der obere Teil der Wanne selbst knapp unterhalb der horizontal nach außen abstehenden Wandung etwas nach innen abgesetzt ist (siehe auch Fig. 4), damit die Wanne auch einschiebbar ist.

Auf der Oberseite der Böcke ist jeweils eine rechtwinklig ausgebildete Schale 635 angeformt, deren Neigungswinkel dem einer Sitzschale 392 entspricht. Dabei ist der Boden der Schale im Laufbereich der vorderen Laufrollen 623 nach oben abgewinkelt und, mit den horizontal nach außen abstehenden Wandungen ein und dieselbe Wandung bildend, über die Laufrollen hinweggezogen (siehe auch Fig. 3 links).

Ein in der Schale 635 eingesetztes seitliches Sitzpolster 610 bzw. 611, dessen untere Rückseite nach oben abgesetzt ist (siehe Fig. 5 oben) liegt also rückseitig plan auf dem hochgezogenen Boden auf.

Während nun ein seitliches Sitzpolster rückseitig eine Dünnstelle aufweist, weist ein in der Sitzschale 392 eingesetztes Sitzpolster 390 auf der Vorderseite eine Dünnstelle auf (siehe Fig. 14), was hier problematischer ist.

Für die Befestigung eines Sitzpolsters 390 auf der Vorderseite ist gemäß Fig. 14 ein Formstück 612 als Polsterfüllung auf der Vorderseite des Sitzpolsters vorgesehen, wobei das Formstück von unten her an der Bodenplatte der Sitzschale befestigt ist und auch dünner ausgeführt sein kann, damit oberhalb desselben auch noch eine übliche Polsterfüllung unterbringbar ist.

Für die Arretierung der Sitzwanne in ihrer jeweiligen Längsstellung ist hier eine lose schwenkbar auf der unteren Querachse 396 des hinteren Stützbügels gelagerte, als beidarmig wirkender Hebel ausgebildete Klinke 614 vorgesehen (siehe Fig. 2), die mittels einer Zugfeder 620 in Eingriff zu einer auf der Deckplatte 452 eines Unterbaues befestigten Zahnstange 618 gehalten ist.

Das in Gegenfahrrichtung weisende Schwenkende der Klinke ist zu einem nach unten ragenden Klinkenzahn ausgebildet, der mittels der Zugfeder nach unten in eine entsprechende Zahnlücke der Zahnstange hineingedrückt ist. Dabei ist die Zugfeder am entgegengesetzten, in Fahrrichtung weisenden Hebelarm der Klinke bzw. an einem für ihre Betätigung vorgesehenen Ausrasthebel 627, der durch einen in der Rückwand der Sitzwanne vertikal angebrachten Schlitz hindurch nach außen geführt ist, angelenkt und mit ihrem oberen Federende an der Sitzwanne eingehängt.

Gegenüber einer in Fig. 14 dargestellten einarmig ausgebildeten Klinke 614', deren Klinkenzahn an dem in Fahrrichtung weisenden Hebelarm der Klinke angeformt ist, hat die in Fig. 2 dargestellte Klinke den Vorteil, daß sie bei einem entsprechend heftigen Frontalaufprall aushebbar ist, so daß der Kindersitz dann in Fahrrichtung verschiebbar ist, wodurch der Aufprall für ein Kind gemindert wird.

Dabei ist der für das Ausheben der Klinke erforderliche Kraftaufwand durch die gewählte Zahnform und bis zu einem gewissen Maß auch durch die Auslegung der Zugfeder bestimmbar.

Eine auf der Unterseite der Sitzschale 392 mit üblichen Polsterknöpfen befestigte gepolsterte Kinderlehne 391 ist zweckmäßigerweise etwas schmäler gehalten wie die Sitzschale (siehe Fig. 3), so daß zwischen den Außenseiten der Sitzschale und der Sitzwanne 400 ein stabiler Anschlag ermöglicht ist (siehe Fig. 1). Dabei ist die horizontale Bodenplatte der Sitzwanne auf den Außenseiten des Bodens schräg nach vorne hochgezogen (siehe auch Fig. 4) und unterhalb der Sitzschale 392 der schräg nach unten geneigten Bodenplatte der Schale angepaßt, so daß beidseits Anschlagflächen 426 gegen die Außenseiten der Sitzschale gebildet sind.

Um nun den auf den Außenseiten der Sitzwanne hochgezogenen Boden auch zu Rasten 431 für eine untere Querachse 404 eines vorderen Stützbügels für einen Klappsitz ausbilden zu können, sind die hochgezogenen Bodenpartien etwas breiter ausgebildet, als dies für den Anschlag der Sitzschale erforderlich wäre, so daß dann die untere Querachse, die in ihrer Länge durch den Abstand der beiden Stützen des hinteren Stützbügels begrenzt ist (s. Fig. 1), auch in die Rasten einsetzbar ist.

Damit nun die Kinderlehne nicht auf den Anschlagflächen 426 aufsitzt, sind die Anschlagflächen auf den Außenseiten der Lehne nach unten abgesetzt bzw. um die Lehne herumgezogen.

Für einen in Fig. 2 im aufgeklappten Zustand dargestellten Kinderklappsitz ist eine Sitzplatte 427 vorgesehen, auf der ein Kindersitzpolster 406 mit üblichen Polsterknöpfen befestigt ist und für deren Schwenklagerung um die obere Querachse 395 des hinteren Stützbügels beidseits Lagerlaschen 413 rückseitig an der Sitzplatte angeformt bzw. schräg nach hinten hochgezogen sind.

Für die axiale Lagefixierung der Sitzplatte (siehe Fig. 6) dient hier das an der Stütze 394 angeformte obere Lagerauge 634, das zur Außenseite der entsprechenden Lagerlasche hin entsprechend abgestimmt ist, wobei auf der Innenseite der Lagerlasche ein Stellring auf der oberen Querachse des Stützbügels aufgebracht ist, der die axiale Lagefixierung vervollständigt.

Ein üblicher, aus zwei Stützen 402 und zwei Querachsen 403 u. 404 bestehender vorderer Stützbügel ist hier schwenkbar um seine obere Querachse 403 an der vorderen Unterseite der Sitzplatte 427 gelagert, wobei für die Lagerung der oberen Querachse beidseits Lageraugen 409 an der Sitzplatte angeformt sind.

Die Schwenkbarkeit des Klappsitzes ist durch die bereits erwähnten, in der Sitzwanne eingeformten Rasten 431 begrenzbar, in welche die untere Querachse 404 des vorderen Stützbügels eingesetzt werden kann (siehe Fig. 2).

Dabei ist ein hinteres Rasterpaar für eine Sitzstellung und ein vorderes Rasterpaar für eine etwas flachere Liegestellung der Sitzplatte (siehe Fig. 5) vorgesehen (siehe auch Fig. 4).

Die hinteren Rasten sind so angebracht, daß der in die Rasten eingesetzte vordere Stützbügel in seiner Sitzstellung in etwa die gleiche Schräglage aufweist wie der hintere Stützbügel.

Als Sicherheitsschwenkbegrenzung für den Klappsitz ist zwischen den Lagerlaschen 413 der Kindersitzplatte und der Anschlagfläche 428 der Sitzschale, sowie zwischen der rückseitig entsprechend ausgebildeten Kindersitzplatte und der Anschlagfläche 429 der Sitzwanne ein Anschlag in einer gegenüber der Liegeschwenkstellung noch etwas flacheren Schwenkstellung der Kindersitzplatte gebildet, wobei die Lagerlaschen und die Sitzplatte rückseitig eine Ebene bildend den beiden zueinander fluchtenden Anschlagflächen angepaßt sind (siehe Fig. 2).

Eine in Fig. 7 dargestellte Rücksitzlehne für einen Universal-Automobilsitz besteht aus einem unteren Rückenpolster 417, das in eine untere Rückenschale 607 eingesetzt ist,- einem oberen Rückenpolster 606, das in eine obere Rückenschale 424 eingesetzt ist, sowie aus seitlichen Rückenpolstern 603 und 604, die in seitlichen Rückenschalen 600 und 601 eingesetzt sind. Dabei sind hier die äußeren seitlichen Rückenpolster 604 bzw. die äußeren seitlichen Rückenschalen 601, die zueinander spiegelbildlich ausgeführt sind, nur halb so breit wie die mittleren seitlichen Rückenpolster 603 bzw. die mittleren seitlichen Rückenschalen 600.

Sämtliche Rückenschalen 607, 424, 600 u. 601 bestehen jeweils aus einer rechtwinkligen Bodenplatte mit seitlich nach vorne hochgezogenen Außenwänden (siehe Fig. 9 u. Fig. 2), so daß die eingesetzten Polster ohne zusätzliche Befestigung ausreichend festgehalten sind. Dabei weisen die Außenwände der Schalen an ihren vorderen Enden einen leicht nach innen gezogenen Rand auf, damit die Polster etwas mehr Halt haben.

Die Stabilität der Rücksitzlehne ist durch eine untere Querachse 416a und eine obere Querachse 613, auf denen die seitlichen Rükkenschalen aufgefädelt bzw.aufgepaßt sind, gewährleistet.

Zwecks Lagerung der seitlichen Rückenschalen sind dieselben mit einem oberen und einem unteren Lagerauge ausgestattet, in denen entsprechende, parallel zueinander angeordnete Bohrungen angebracht sind (siehe Fig. 12), durch welche die beiden Querachsen hindurchgeführt sind.

Dabei sind äußeren seitlichen Rückenschalen 601 außen bündig auf der oberen Querachse der Lehne aufgebracht und nur durch übliche Gewindestifte auf den Querachsen festgeklemmt, während die axiale Lagefixierung der mittleren seitlichen Rückenschalen 600 durch die oberen Rückenschalen 424 gewährleistet ist, die mit seitlich abstehenden Befestigungslaschen 619 ausgestattet sind und jeweils rückseitig mit ihren Laschen an den seitlichen Rückenschalen 600 bzw. 601 festgeschraubt sind, sodaß sich dadurch auch automatisch der richtige Abstand zwischen den mittleren seitlichen Rückenschalen ergibt (siehe Fig. 7 u. 9).

Dabei sind die seitlich abstehenden Befestigungslaschen an beidseits vorgesehenen Winkelleisten angeformt (siehe Fig. 9), die ihrerseits außen bündig an der Rückseite der oberen Rückenschale 424 angeformt sind und die mit ihren nach innen gezogenen Schenkeln zusammen mit der Bodenplatte der Rückenschale beidseits Führungsnuten 419 bilden, in denen eine Tischplatte 418 mit ihrer oberen, seitlich abstehenden Querachse 423 bzw. mit ihren seitlich abstehenden Zapfen 423 verschiebbar geführt ist (siehe Fig. 2). Dabei sind die seitlichen Führungsnuten 419 jeweils an ihrem unteren Ende begrenzt bzw. zu einem Anschlag ausgebildet und nach oben hin offen, damit die Tischplatte auch einführbar ist.

Durch beidseits am nach innen gezogenen Schenkel der Führungsnuten befestigte, entsprechend geformte Blattfedern 430, die über den nach innen gezogenen, oben entsprechend begrenzten Schenkeln der Führungsnuten in die Nuten hineinragen und oben zu einem Anschlag abgewinkelt sind, ist nun eine obere Raststellung für die obere Querachse 423 der Tischplatte 418 gebildet (s. Fig. 1') und außerdem auch noch ein Anschlag gegen die Querachse in ihrer oberen Stellung.

Der untere Anschlag der Führungsnuten gegen die Querachse ist nun so angebracht, daß die rückseitig schräg nach oben hochgezogene Tischplatte, die mit ihrem unteren Ende schwenkbar und ausklippsbar an einer Querachse 422 der unteren Rückenschale 607 gelagert ist, in einer in Fig. 2 dargestellten Ausstellage der schwenkbar um die untere Querachse der Lehne gelagerten Rückenschale eine horizontale Tischfläche bildet.

Die Querachse 422 ist an beidseits der unteren Rückenschale hochgezogenen, mit entsprechenden Bohrungen versehenen Lagerflanschen gelagert, wobei die Lagerflansche durch eine an der Vorderseite der Rückenschale hochgezogene Wandung, die nach hinten abgerundet ist, abgedeckt sind.

Die untere Rückenschale weist auf ihrer Unterseite ein mit einer Querbohrung versehenes Lagerauge für ihre Schwenklagerung um die untere Querachse der Lehne auf, wobei das Lagerauge auf der Unterseite zu einer Anschlagleiste 630 ausgebildet ist, deren rückseitige, radial zur Querbohrung gerichtete Anschlagfläche einen Anschlag gegen seitlich abstehende Anschlagnasen 632 der seitlichen Rückenschalen 600 bzw. 601 bildet (siehe Fig. 5 u. 9).

Dabei sind die Anschlagnasen 632 seitlich abstehend jeweils an einem unteren Befestigungsstollen 629 der seitlichen Rückenschalen 600 bzw. 601 angeformt (siehe Fig. 9 u. 12).

Der untere Befestigungsstollen ist nun ebenso wie ein oberer Befestigungsstollen 629 (siehe Fig. 12) rückseitig jeweils an einem der beiden für die Querachsen der Lehne vorgesehenen Lageraugen angeformt und zwar so, daß die vertikal zur Lehne gerichteten Außenseiten der beiden Stollen radial zur Mitte der beiden für die Querachsen vorgesehenen Querbohrungen hin gerichtet sind, so daß für die Anschlagleiste 630 (siehe Fig. 5) der unteren Rückenschale ein einwandfreier Anschlag gebildet ist.

Die Befestigungsstollen dienen zur Befestigung einer Rückwand 425a und bilden gleichzeitig einen oberen und unteren Abschluß der Lehne, während ein seitlicher Abschluß der Lehne durch die äußeren seitlichen Rückenschalen gebildet ist (siehe Fig. 9), deren Außenwandung bis zur Rückwand nach hinten gezogen ist und stirnseitig eine Auflagefläche für dieselbe bildet.

Die an der Anschlagleiste 630 vorgesenene Anschlagfläche der unteren Rückenschale 607 (siehe Fig. 5) ist nun so angebracht, daß die Rückenschale in abgeschwenkter Anschlagstellung (bei ausgeklippster und in Raststellung gebrachter Tischplatte 418) dieselbe Schräglage aufweist wie der Kinderklappsitz in seiner Liegeschwenkstellung.

Dabei ist auf der Rückseite der unteren Rückenschale ein Kopfpolster 628 aufgebracht (mit üblichen Polsterknöpfen), dessen obere Auflagefläche für den Kopf mit dem Kindersitzpolster 406 bei ausgezogener Sitzwanne 400 ein und dieselbe Ebene bildet und das zum angestellten Sitzpolster hin (siehe strichpunktiert angedeutetes Sitzpolster) eine schräg nach unten gezogene Auflagefläche bildet, so daß ein stufenloser Übergang geschaffen ist, um ein Baby in einem richtigen Automobil auch richtig betten zu können.

Als Kopfschutz für alle Fälle ist auf der Innenseite der Rückwand ein Kopfschutzpolster 640 aufgebracht, das auch als Anschlag gegen das Kopfpolster 628 dient (siehe Fig. 1).

Natürlich ist in einem hinter der Rücksitzlehne eines SiPKW's vorgesehenen Regal 438 (siehe Fig. 2) ein polideilich vorgeschriebenes Kopfkissen untergebracht.

Damit auch für Kleinkinder eine Liegefläche erstellt werden kann, ist in dem erwähnten Regal auch noch ein zusätzliches Zwischenpolster 636 untergebracht (siehe Fig. 5 oben), das im Bedarfsfall bei ausgezogener Sitzwanne zwischen dem Kindersitzpolster und dem Kopfpolster einsetzbar ist, wodurch dann die Liegefläche nach unten verlängert ist. Zu diesem Zweck ist hier an der unteren Vorderseite der Kindersitzplatte 427 beidseits eine Winkelleiste 638 angeformt, deren nach vorne abstehender Schenkel jeweils als Auflage für eine zur Befestigung des Zwischenpolsters vorgesehene Bodenplatte 637 dient.

Dabei weist die Bodenplatte, die in ihrer Breite der Kindersitzplatte entspricht, an ihrem entgegengesetzten Ende auf ihrer Unterseite beidseits angeformte Krallen auf, die auf die Querachse 422 der unteren Rückenschale 607 aufsetzbar sind.

Die Krallen sind unmittelbar innerhalb der für die Lagerung der Querachse 422 vorgesehenen seitlichen Lagerflansche angebracht, so daß die Bodenplatte auch seitlich in ihrer Lage fixiert ist. Für eine schwenkbar um die obere Querachse 613 der Lehne gelagerte Kopfstütze 436a (siehe Fig. 1 u. 2) ist eine stabile, mit einem Lagerauge ausgestattete Stützplatte 631a vorgesehen, wobei für die Arretierung der Kopfstütze in ihrer in Fig. 1 dargestellten Gebrauchslage eine in Fig. 8 im Schnitt dargestellte übliche Arretiereinrichtung 451 in Anwendung gebracht ist.

Als Arretiereinrichtung ist hier ein axial verschiebbar gelagerter Arretierbolzen vorgesehen, der durch eine Druckfeder in einer seitlich in der Stützplatte der Kopfstütze angebrachten Sackbohrung festgehalten ist.

Dabei ist der Arretierbolzen bei der in Fig. 7 dargestellten Rücksitzlehne in einem auf dem oberen Lagerauge einer seitlichen Rückenschale angeformten zusätzlichen Lagerauge gelagert, wobei für seine äußere Lagerung hier ein außenseitig nach oben abgewinkelter Winkelhebel vorgesehen ist, der aus einem Stangerl gefertigt und drehfest abgesichert in den Arretierbolzen axial eingeschraubt ist und der zum Ausrasten des Arretierbolzens dient. Dabei kann der Winkelhebel, herausgezogen und seitlich abgeschwenkt, auch an seitlich angeformten Sitegen des zusätzlichen Lagerauges eingehängt werden, so daß dann die Kopfstütze lose schwenkbar ist.

Für eine in Fig. 1' und Fig. 8 dargestellte Kopfstütze 436 einer Vordersitzlehne gilt diesbezüglich dasselbe, wobei hier lediglich das zusätzliche Lagerauge für die Lagerung des Arretierbolzens an einem etwas größer ausgebildeten oberen Lagerauge eines inneren seitlichen Rückenteiles 388 der Lehne angeformt ist, während das äußere spiegelbildlich ausgebildete seitliche Rückenteil der Lehne kein zusätzliches Lagerauge aufweist, was auch für eine der beiden äußeren seitlichen Rückenschalen einer Rücksitzlehne (hier auf der Beifahrerseite) zutreffend ist.

Statt einer oberen, für eine Rücksitzlehne vorgesehenen Querachse 613 ist bei der in Fig. 8 dargestellten Beifahrersitzlehne und auch bei einer Fahrersitzlehne ein Rohr 369 als Verbindung zwischen den beiden seitlichen Rückenteilen 388 in entsprechend ausgebildeten Bohrungen eingepaßt, wobei auf den Außenseiten des Rohres Lagerbuchsen für die Schwenklagerung einer Querachse 351 eines vorderen Schutzbügels 344, 351 eingesetzt sind.

Eine Kopfstütze 436 ist hier mit ihrer Stützplatte 631 (s. Fig. 1') schwenkbar auf dem Rohr gelagert und soweit nach hinten abschwenkbar, bis ihr tangential abstehendes Kopfteil bei normaler Schwenkstellung der Lehne vertikal nach unten absteht, so daß eine für eine Vordersitzlehne vorgesehene Rückwand 425 im Bereich der Kopfstütze entsprechend nach innen abgewinkelt ist.

Die im Querschnitt U-förmig ausgebildeten seitlichen Rückenteile 388 (siehe Fig. 10) weisen auf ihrer Unterseite jeweils ein Lagerauge mit einer durchgehenden Querbohrung für die Aufnahme einer unteren Querachse 416 auf (siehe Fig. 8 u. Fig. 11), wobei die beiden Lagerbohrungen für diese Querachse und das Rohr 369 zueinander parallel angebracht und im Achsabstand entsprechend toleriert sind.

Der die beiden Schenkel verbindende Steg des im Querschnitt jeweils U-förmig ausgebildeten seitlichen Rückenteiles 388 (siehe Fig. 10) dient hier auf seiner Vorderseite für die Auflage bzw. zur Befestigung eines seitlichen Rückenpolsters 605, das zweckmäßigerweise etwas dicker ausgebildet ist wie dargestellt, sodaß eine sogenannte Schalenform gebildet ist und das mit üblichen Polsterknöpfen befestigt ist (was recht schön aussieht).

Dabei bildet der äußere Schenkel des U-förmig ausgebildeten Rükkenteiles eine bis zur Rückwand nach hinten gezogene Außenwandung, während der innere Schenkel in seiner Höhe der Außenwandung einer mittleren seitlichen Rückenschale 600 entspricht (siehe Fig. 9), damit bei einer Beifahrersitzlehne dieselben Rückenschalen 424 u. 607 und dieselben Rückenpolster 606 u. 417 verwendbar sind wie bei einer Rücksitzlehne (siehe Fig. 7), während bei einer Fahrersitzlehne eine durchgehende Rückenschale vorgesehen ist, die entsprechend einer oberen Rückenschale 424 hier an seitlich nach innen abstehenden Befesigungslaschen 639 der seitlichen Rückenteile befestigt ist (siehe Fig. 11) und für deren Befestigung hier in "weiser" Voraussicht auch schon eine zusätzliche Lasche auf der Unterseite vorgesehen ist.

Für die Befestigung der Rückwand (siehe Fig. 11) sind genau gleich wie bei einer seitlichen Rückenschale einer Rücksitzlehne Befestigungsstollen 629 mit am unteren Stollen nach innen abstehenden Anschlagnasen 632 für die untere Rückenschale an den Lageraugen angeformt, wobei die Anschlagnasen bei einer Fahrersitzlehne nur deshalb vorgesehen sind.

Die unteren Lageraugen der seitlichen Rückenteile 388 einer Vordersitzlehne und auch die unteren Lageraugen der äußeren seitlichen Rückenschalen 601 einer Rücksitzlehne sind jeweils auf den Außenseiten der Lehne nach innen abgesetzt (siehe Fig. 7 u. 8), damit außen bündig zur Lehne jeweils ein übliches Lager 415 an den Enden der Querachse 416 bzw. 416a anbringbar ist.

Dabei sind die Lager jeweils rückseitig auf einem äußeren seitlichen Führungsbock 609 des Sitzes bzw. der Sitzbank befestigt (siehe Fig. 1).

Auf der Innenseite der in Fig. 8 dargestellten Beifahrersitzlehne (bei einem linksgesteuerten Automobil also auf der rechten Seite) ist zwischen dem inneren Lager 415 und dem inneren seitlichen Rückenteil eine Schwenkwinkelarretierung bzw. Verstelleinrichtung 615 für den Schwenkwinkel der Lehne lediglich angedeutet.

Ebenfalls auf der Innenseite ist hier eine Einrichtung 617 zum Wiederhochschwenken des Schutzbügels 344, 351 anmontiert, wobei ein dafür vorgesehener Getriebemotor auf der Innenseite des die Außenwandung bildenden äußeren Schenkels des seitlichen, im Querschnitt U-förmig ausgebildeten Rückenteiles festgeflanscht ist. An der Außenwandung der Lehne bzw. des äußeren seitlichen Rückenteiles ist hier eine Einrichtung 616 für das Einrasten und Auslösen des Schutzbügels anmontiert.

Sämtliche Formteile sind zweckmäßigerweise im Druckguß- oder Spritzgußverfahren gefertigt, wobei als Werkstoff eine geeignete Leichtmetall- oder evtl. Zinklegierung bzw. ein geeigneter thermoplastischer Kunststoff in Erwägung gezogen sind.

Bei geeigneter Normung der Abmaße, die dann ähnlich den Abmaßen eines Fußballfeldes oder eines Tennisplatzes international festgelegt und nicht mehr abgeändert werden, können die entsprechend ausgebildeten Formteile über Generationen hinweg immer wieder verwendet werden.

Es wurde nun glatt "vergessen", zu erwähnen, daß die auf der Vorderseite der Sitzschale 392 kreisbogenförmig um die obere Querachse 395 des hinteren Stützbügels herumgezogene Bodenplatte der Sitzschale (siehe Fig. 1) unterhalb der Anschlagfläche 428 bzw. unterhalb des Sitzpolsters 390 an der Vorderkante nach unten verlängert ist, wo die nach unten gezogene Wandung der Bodenplatte mit den seitlichen Lagerflanschen 393 der Schale außen bündig abschließt und nur im Bereich der Stützen 394 des Stützbügels freigespart bzw. nach innen gezogen ist, so daß beidseits wirksame Anschlagflächen 428 gebildet sind.

Um hier im Bereich der Anschlagflächen eine Quetschgefahr beim Hochklappen der Sitzschale auszuschließen, ist die auf ihrer Oberseite etwas nach innen abgesetzte Sitzwanne 400 (siehe Fig. 4) seitlich entsprechend abgerundet oder leicht nach unten abgesetzt.

## Patentansprüche

1. Universal- Automobilsitz für kleine und große Insassen, insbesondere Mitinsassen, mit einer in Fahrrichtung hochschwenkbar gelagerten Sitzschale, in der ein Sitzpolster eingesetzt ist und auf deren Unterseite eine gepolsterte Kindersitzlehne aufgebracht ist, so daß die Sitzschale auch als Lehne für ein Kind eine bequeme Auflagefläche bildet, **dadurch gekennzeichnet,** daß eine Sitzschale (392) an einer oberen Querachse (395) eines aus zwei Querachsen (395 u. 396) und zwei Stützen (394) bestehenden Stützbügels (394, 395, 396) gelagert ist und daß die Sitzschale an ihrer Vorderseite beidseits Anschlagflächen (428) gegen die Stützen (394) des Stützbügels aufweist, wobei der Stützbügel seinerseits mit seiner unteren Querachse (396) schwenkbar in einer Sitzwanne (400) gelagert ist.

2. Universal- Automobilsitz nach Anspruch 1 **dadurch gekennzeichnet,** daß in der Sitzwanne (400) eine Anschlagfläche (429) gegen die beiden Stützen (394) des Stützbügels (394, 395, 396) angeformt ist, wobei die Anschlagfläche so angebracht ist, daß der Stützbügel von seiner Anschlagschwenkstellung aus mit seiner oberen Querachse (395) in Gegenfahrrichtung hochschwenkbar um seine untere Querachse (396) in der Sitzwanne (400) gelagert ist.

3. Universal- Automobilsitz nach Anspruch 1 u. 2 **dadurch gekennzeichnet,** daß die Sitzschale (392) aus einer Bodenplatte besteht, die seitlich und hinten hochgezogene Wandungen aufweist, während sie auf der Vorderseite zylinderförmig um die obere Querachse (395) des Stützbügels (394, 395, 396) herumgezogen und entsprechend der für ihren Anschlag vorgesehenen Anschlagflächen (428) nach oben abgewinkelt ist und eine Vorderkante bildet, wobei die Vorderkante nach unten abgewinkelt wiederum zylinderförmig um die Querachse herum und etwas nach innen gezogen ist und wobei die so gebildete vordere, zylindrisch geformte Wandung der Sitzschale im Bereich der Stützen (394) des Stützbügels freigespart oder etwas nach innen gezogen ist und daß auf den Außenseiten dieser Partie Lagerflansche (393) für die Schwenklagerung der Sitzschale um die obere Querachse des Stützbügels an der Unterseite der Bodenplatte angeformt sind und daß die Anschlagflächen (428) so angebracht sind, daß sich die Sitzschale in der durch die Anschlagfläche (429) der Sitzwanne (400) bestimmten Anschlagschwenkstellung des Stützbügels in einer Gebrauchsschwenkstellung als Lehne befindet.

4. Universal- Automobilsitz nach Anspruch 1 bis 3 **dadurch gekennzeichnet,** daß die Stützen (394) des Stützbügels (394, 395, 396) innerhalb der seitlichen Lagerflansche (393) der Sitzschale (392) angeordnet sind und daß eine der beiden Stützen axial verschiebbar zu den Querachsen des Stützbügels gelagert ist, wobei diese Stütze einen axial nach außen abstehenden Rastbolzen (397) aufweist und durch eine auf der unteren Querachse (396) des Stützbügels wirksam aufgebrachte Druckfeder (399) mit ihrem Rastbolzen nach außen gegen den entsprechenden Lagerflansch der Sitzschale angedrückt ist und daß dieser Lagerflansch entsprechende Vertiefungen auf seiner Innenseite aufweist, die so ausgebildet und angeordnet sind, daß der Rastbolzen zumindest in der Gebrauchsschwenkstellung der Sitzschale als Lehne, sowie in einer vertikalen Schwenkstellung der Sitzschale einrastbar ist und daß zwischen der axial verschiebbar gelagerten Stütze und dem entsprechenden Lagerflansch ein nur in einer Schwenkrichtung wirksamer Festanschlag vorgesehen ist, der ein unbeabsichtigtes Zurückklappen der Sitzschale in ihre Sitzschwenkstellung verhindert, jedoch durch Verschieben der Stütze nach innen in bekannter Weise ausklinkbar ist.

5. Universal- Automobilsitz nach Anspruch 1 bis 4 **dadurch gekennzeichnet,** daß die Sitzwanne (400) eine horizontal angeordnete Bodenplatte aufweist, wobei eine von der Bodenplatte hochgezogene Rückwand nach vorne abgewinkelt und zylinderförmig um die Lagerflansche (393) der Sitzschale (392) herumgezogen an ihrem vorderen Ende nach unten abgewinkelt ist und mit dem abgewinkelten Ende die Anschlagfläche (429) gegen die Stützen (394) des Stützbügels (394, 395, 396) bildet und daß die Sitzwanne außenseitig hochgezogene Wandungen (625) aufweist, während die vordere Abschlußwandung der Wanne durch eine von unten her in die Bodenplatte eingeformte, V- förmig ausgebildete Rinne mit nach unten abstehenden Schenkeln gebildet ist.

6. Universal- Automobilsitz nach Anspruch 1 bis 5 **dadurch gekennzeichnet,** daß eine Kindersitzplatte (427) auf ihrer Rückseite beidseits schräg nach hinten hochgezogene Lagerlaschen (413) aufweist und mit diesen Lagerlaschen schwenkbar an der oberen Querachse (395) des Stützbügels (394, 395, 396) gelagert ist, wobei die Kindersitzplatte und die Lagerlaschen rückseitig eine gegen die Anschlagflächen (428 u. 429) der Sitzschale (392) und der Sitzwanne (400) gerichtete Anschlagfläche in einer unteren Sicherheitsschwenkstellung der Kindersitzplatte aufweisen.

7. Universal- Automobilsitz nach Anspruch 2, 5 u. 6 **dadurch gekennzeichnet,** daß ein aus zwei Querachsen (403 u. 404) und zwei Stützen (402) bestehender Stützbügel (402, 403, 404) mit seiner oberen Querachse (403) schwenkbar an der vorderen Unterseite der Kindersitzplatte (427) gelagert ist und einen vorderen Stützbügel für die Kindersitzplatte bildet, indem die untere Querachse (404) des Stützbügels in beidseits an der Sitzwanne (400) angebrachten Rasten (431) einsetzbar ist und daß zwei Rasterpaare vorgesehen sind, wovon ein hinteres Rasterpaar für eine Sitzschwenkstellung der Kindersitzplatte so angebracht ist, daß der vordere Stützbügel der Kindersitzplatte in etwa die gleiche Schräglage aufweist wie der hintere Stützbügel (394, 395, 396) in seiner Anschlagschwenkstellung, während ein vorderes Rasterpaar so angebracht ist, daß eine etwas flachere Liegeschwenkstellung für die Kindersitzplatte erstellbar ist.

8. Universal- Automobilsitz nach Anspruch 1, 5 u. 7 **dadurch gekennzeichnet,** daß die beidseits der Sitzwanne (400) angebrachten Rasten (431) für die untere Querachse (404) des vorderen Stützbügels (402, 403, 404) in schräg nach vorne hochgezogenen, äußeren Bodenpartie'en der Sitzwanne eingeformt sind, wobei die hochgezogenen Bodenpartie'en mit ihren Oberseiten zu Anschlagflächen (426) gegen die Unterseite der Sitzschale (392) in deren Schwenkstellung als Sitz ausgebildet sind und daß die Anschlagflächen innen im äußeren Bereich der auf der Unterseite der Sitzschale befestigten, etwas schmäler ausgebildeten Kindersitzlehne (391) entsprechend nach unten abgesetzt sind, so daß die Kindersitzlehne nicht aufsitzt.

9. Universal- Automobilsitz nach Anspruch 1 u. 5 **dadurch gekennzeichnet,** daß die Sitzwanne (400) verschiebbar auf 4 Rollen (623) gelagert ist und daß für die Lagerung der Rollen die untere Querachse (396) des hinteren Stützbügels (394, 395, 396) und eine zusätzliche vordere Querachse (622) in Anwendung gebracht sind, wobei die beiden Querachsen in den seitlich hochgezogenen Außenwandungen (625) der Sitzwanne gelagert sind, während die Rollen lose drehbar auf den nach außen abstehenden Enden der Querachse aufgebracht sind.

10. Universal- Automobilsitz nach Anspruch 5 u. 9 **dadurch gekennzeichnet,** daß für die Lagefixierung der Sitzwanne (400) in ihrer jeweiligen Längsstellung eine lose schwenkbar um die untere Querachse (396) des hinteren Stützbügels (394, 395, 396) gelagerte, beidarmig ausgebildete Klinke (614) vorgesehen ist, deren in Gegenfahrrichtung weisendes Schwenkende einen nach unten abstehenden Klinkenzahn aufweist, der durch eine am entgegengesetzten Schwenkarm der Klinke angelenkte Zugfeder, die mit ihrem oberen Ende an der hochgezogenen und nach vorne abgewinkelten Rückwand der Sitzwanne (400) eingehängt ist, in Eingriff zu einer unterhalb der Bodenplatte der Sitzwanne fest angebrachten Zahnstange (618) gehalten ist und daß für die Betätigung der Klinke ein Betätigungshebel (627) vorgesehen ist, der durch einen in der Rückwand der Sitzwanne vertikal angebrachten Schlitz hindurch nach außen geführt ist.

11. Universal- Automobilsitz nach Anspruch 5 u. 9 **dadurch gekennzeichnet,** daß auf den Außenseiten der Sitzwanne (400) jeweils ein mit einem unteren Befestigungsflansch versehener Führungsbock (608 bzw. 609) auf einer für die Laufrollen (623) der Sitzwanne vorgesehenen, fest angebrachten Laufschiene (626) befestigt ist, wobei die Führungsböcke auf ihrer Oberseite jeweils zu Schalen (635) ausgebildet sind, in denen ein seitliches Sitzpolster (610 bzw. 611) eingesetzt ist, und daß die Führungsböcke seitlich abstehende Wandungen aufweisen, die über die Laufrollen und die seitlich hochgezogenen Außenwandungen (625) der Sitzwanne knapp hinweggezogen sind und daß die seitliche abstehenden Wandungen der Führungsböcke stirnseitig derselben nach unten gezogen sind, so daß ein Anschlag gegen die Laufrollen bzw. ein vorderer und ein hinterer Anschlag für die Verschiebbarkeit der Sitzwanne gebildet ist und daß die Führungsböcke mit ihren den Laufrollen zugewandten Außenseiten ihrer Befestigungsflansche jeweils eine Anlauffläche für die Laufrollen bilden.

12. Universal- Automobilsitz nach mind. einem der vorhergeh. Anspr. **dadurch gekennzeichnet,** daß ein für einen Mitinsassen vorgesehener Automobilsitz eine Lehne mit einer ausschwenkbar an einer unteren Querachse (416 bzw. 416a) der Lehne gelagerten unteren Rückenschale (607) aufweist, wobei in der Rückenschale ein unteres Rückenpolster (417) eingesetzt ist und wobei an der Rückenschale außenseitig nach oben abstehende Lagerflansche für die Lagerung einer Querachse (422) angeformt sind und daß an einem für die Lagerung der Rückenschale vorgesehenen Lagerauge unterhalb desselben eine Anschlagleiste (630) angeformt ist, deren Anschlagfläche gegen beidseits vorgesehene Anschlagnasen (632) seitlich angebrachter Rückenschalen (600 bzw. 601) bzw. seitlich angebrachter Rückenteile (388) so angebracht ist, daß die Rückenschale in abgeschwenkter Anschlagschwenkstellung in ihrer Neigung dem Neigungswinkel der Kindersitzplatte (427) in deren Liegeschwenkstellung entspricht und daß auf der Rückseite der unteren Rückenschale ein Kopfpolster (628) aufgebracht ist, deren obere Kopfauflagefläche mit der Oberfläche eines auf der Kindersitzplatte (427) befestigten Kindersitzpolsters (406) bei in hinterer Anschlagstellung befindlicher Sitzwanne (400) ein und dieselbe Ebene bildet, wobei das Kopfpolster zum angestellten Kindersitzpolster hin nach unten abgeschrägt ist, so daß ein stufenloser, flach nach hinten hochgezogener Übergang gebildet ist.

13. Universal- Automobilsitz n. mind. einem der vorhergeh. Anspr. **dadurch gekennzeichnet,** daß ein für einen Mitinsassen vorgesehener Automobilsitz eine Lehne mit einer fest an den seitlichen Rückenschalen (600 bzw. 601) bzw. an den seitlichen Rückenteilen (388) anmontierten oberen Rückenschale (424) aufweist, wobei in die Rückkenschale ein oberes Rückenpolster (606) eingesetzt ist und wobei rückseitig an einer Bodenplatte der Rückenschale auf den Außenseiten derselben Winkelleisten angeformt sind, deren nach innen gezogene Schenkel zusammen mit der Bodenplatte beidseits nach innen gerichtete Führungsnuten (419) bilden und daß die Führungsnuten an ihrem unteren Ende zu einem Anschlag ausgebildet und nach oben hin offen sind, wobei die nach innen gezogenen Schenkel der Winkelleisten bzw. der Führungsnuten nach oben hin begrenzt sind und rückseitig nach außen abstehende Befestigungslaschen (619) für die Befestigung der Rückenschale aufweisen.

14. Universal- Automobilsitz nach Anspruch 12 u. 13 **dadurch gekennzeichnet,** daß ein für einen Mitinsassen vorgesehener Automobilsitz eine schräg nach hinten hochgezogene Tischplatte (418) aufweist, wobei die Tischplatte mit ihrem unteren Ende schwenkbar und ausklippsbar an der Querachse (422) der unteren Rückenschale (607) gelagert ist und an ihrem oberen Ende eine seitlich abstehende Querachse (423) oder seitlich abstehende Zapfen (423) aufweist, über welche die Tischplatte verschiebbar in den Führungsnuten (419) der oberen Rückenschale (424) geführt ist und daß an den nach innen gezogenen Schenkeln der Führungsnuten auf deren Außenseiten Blattfedern (430) befestigt sind, die über die nach oben hin begrenzten Schenkel hinweg in die Nuten hineinragen und so geformt sind, daß beidseits eine Raststellung und eine Anschlagstellung für die seitlich abstehende Querachse bzw. für die seitlich abstehenden Zapfen der Tischplatte gebildet ist.

15. Universal- Automobilsitz n. mind. einem der vorhergeh. Anspr. **dadurch gekennzeichnet,** daß ein für jeden Insassen vorgesehener Automobilsitz eine Lehne mit einer schwenkbar gelagerten Kopfstütze (436 bzw. 436a) aufweist, wobei die Kopfstütze an einem Rohr (369) oder an einer Querachse (613) der Lehne gelagert ist und daß das Rohr die obere Querachse einer Vordersitzlehne bildet, während die Querachse die obere Querachse einer Rücksitzlehne bildet.

16. Universal- Automobilsitz nach Anspruch 12 u. 15 **dadurch gekennzeichnet,** daß eine Lehne für eine Rücksitzbank seitliche Rückenschalen (600 bzw. 601) aufweist, in denen seitliche Rückenpolster (603 bzw. 604) eingesetzt sind und daß die seitlichen Rückenschalen jeweils ein unteres Lagerauge für die Lagerung der unteren Querachse (416a) für die Schwenklagerung der unteren Rückenschale (607) und ein oberes Lagerauge für die Lagerung der oberen Querachse (613) für die Schwenklagerung der Kopfstütze (436a) aufweisen.

17. Universal- Automobilsitz nach Anspruch 12 u. 15 **dadurch gekennzeichnet,** daß eine Lehne für einen Vordersitz seitliche Rückenteile (388) aufweist, auf denen seitliche Rückenpolster (605) aufgebracht sind und daß die seitlichen Rückenteile jeweils ein unteres Lagerauge für die Lagerung der unteren Querachse (416) für die Schwenklagerung der unteren Rückenschale (607) und ein oberes Lagerauge für die Lagerung des Rohres (369) für die Schwenklagerung der Kopfstütze (436) aufweisen.

18. Universal- Automobilsitz nach Anspruch 12, 16 u. 17 **dadurch gekennzeichnet,** daß auf den Rückseiten der Lageraugen einer seitlichen Rückenschale (600 bzw. 601), sowie eines seitlichen Rückenteiles (388) jeweils ein Befestigungsstollen (629) für die Befestigung einer Rückwand (425a bzw.

425) angeformt ist, wobei an den unteren Befestigungsstollen jeweils zur Sitzmitte hin eine nach außen abstehende Anschlagnase (632) gegen die Anschlagleiste (630) einer unteren Rückenschale (607) angeformt ist.

## Claims

1. Universal motor car seat for little and grown-up occupants, especially passengers, provided with a seat pan which is gimballed in such a way that it can be upwardly slued into the direction of travel and which is provided with an inserted seat cushion and the lower side of which is provided with a cushioned children's seat rest so that the seat pan thus transformed into a back rest can also be used as a comfortable surface for a child, **characterised in that** a seat pan (392) is pivoted at an upper transversal axis (395) of a supporting yoke (394, 395, 396) consisting of two transversal axes (395 and 396) and two brackets (394), and in that the front side of the seat pan is provided on both sides with stop faces (428) against the brackets (394) of the supporting yoke, being the lower transversal axis (396) of the supporting yoke gimballed in a seat shell (400).

2. Universal motor car seat as set forth in claim 1 **characterised in that** a stop face (429) is integrated into the seat shell (400) against the two brackets (394) of the supporting yoke (394, 395, 396), being the stop face mounted in such a way that, via its upper transversal axis (395), the supporting yoke is, from the position where it has reached the buffer in the final swivelling position, gimballed in the seat shell (400) around its lower transversal axis (396) in such a way that it can be slued upwardly and into the opposite travel direction.

3. Universal motor car seat as set forth in claims 1 and 2 **characterised in that** the seat pan (392) consists of a bottom plate which at its back part and sides is provided with upwardly extended walls whereas its front part is developed in such a way that it is cylindrically extended around the upper transversal axis (395) of the supporting yoke (394, 395, 396), and that, corresponding to the stop faces (428) provided for its stop, it is upwardly angled and forms a leading edge, being this leading edge downwardly angled and also cylindrically extended somewhat inwardly and around the transversal axis, and leaving the thus developed cylindrically front wall of the seat pan open in the scope of the brackets or pulling it somewhat towards the inside, and in that at the outside of the said part bearing flanges (393) for the swivel bearing of the seat pan are integrated around the upper transversal axis of the supporting yoke at the lower part of the bottom plate and in that the stop faces (428) are affixed in such a way that, in a position where the supporting yoke has reached the buffer in the final swivelling position determined by the stop face (429) of the seat shell (400), this seat pan can be converted into a back rest, when in an operational swivelling position.

4. Universal motor car seat as set forth in claims 1 to 3 **characterised in that** the brackets (394) of the supporting yoke (394, 395, 396) are installed within the lateral bearing flanges (393) of the seat (392) pan, and in that one of the two brackets is pivoted axially adjustable in relationship to the transversal axes of the supporting yoke, being the said bracket provided with an indexing bolt (397) which is axially projecting toward the outside, and being, by means of a pressure spring (399) which is effectively installed on the lower transversal axis (396) of the supporting yoke, outwardly pressed against the corresponding bearing flange of the seat pan with its indexing bolt, and in that this bearing flange is provided on its inner side with corresponding dimples developed and installed in such a way that—at least in the operational swivelling position of the seat pan when converted into a back rest, but also in a vertical swivelling position of the seat pan — the indexing bolt is engageable, and in that between the bracket, which is pivoted axially adjustable, and the corresponding bearing flange there is provided a fixed stop only effective into one direction which shall prevent an unintentional folding back of the seat pan into its swivelling position when used as a seat but which can also be inwardly disengaged in the known manner by adjusting the bracket.

5. Universal motor car seat as set forth in claims 1 to 4 **characterised in that** the seat shell (400) is provided with a horizontally affixed bottom plate, being a back wall, which is upwardly extended from the bottom plate, angled towards the front and cylindrically extended around the bearing flanges (393) of the seat pan (392), angled downwardly at its front end and developed in such a way that, by means of the angled end, it forms the stop face (429) against the brackets (394) of the supporting yoke (394, 395, 396), and in that the seat shell is provided with peripherally and upwardly extended walls (625) whereas the front final wall of the pan is developed by a dihedral groove integrated into the bottom plate from below and provided with downwardly projecting angle sides.

6. Universal motor car seat as set forth in claims 1 to 5 **characterised in that** a children's seat plate (427) is on both sides of its back side provided with pivot splice straps (413) which are backwardly extended in an inclined manner and that it is gimballed at the upper transversal axis (395) of the supporting yoke (394, 395, 396), being, in a lower safety swivelling position of the children's seat plate, the back side of this children's seat plate and the back side of the pivot splice straps provided with a stop face directed against the stop faces (428 and 429) of the seat pan (392) and of the seat shell (400).

7. Universal motor car seat as set forth in claims 2, 5 and 6 **characterised in that** a supporting yoke (402, 403, 404) consisting of two transversal axes (403 and 404) and two brackets (402) is gimballed with its upper transversal axis (403) at the front lower side of the children's seat plate and, via the lower transversal axis (404) of the supporting yoke which can be inserted into indentation notches (431) affixed on both sides of the seat shell (400), develops a front supporting yoke for this children's seat plate, and in that two pairs of grooves are provided, the back pair of which is mounted in such a way for the swivelling position of the children's seat plate when used as a seat that the front supporting yoke of the children's seat plate shows about the same inclination as the back supporting yoke (394, 395, 396) when it has reached the buffer in the final swivelling position, whereas a front pair of grooves is mounted in such a manner that a children's seat plate, when used as a lying surface, can be adjusted into a somewhat less inclined swivelling position.

8. Universal motor car seat as set forth in claims 1, 5 and 7 **characterised in that** the indentation notches (431) for the lower transversal axis (494) of the front supporting yoke (402, 403, 404) affixed on both sides of the seat shell (400) are integrated into the peripheral bottom parts of the seat shell which are developed upwardly and in a sloped manner towards the front, being the upwardly developed bottom parts with their upper sides formed as stop faces (426) against the lower side of the seat pan (392) in its swivelling position when used as a seat, and in that, in order to prevent the children's back rest from resting on the surface below, the stop faces, on the inside and in the peripheral area, are downwardly offset in a manner corresponding to the children's seat rest (391) which is developed somewhat more narrow and affixed on the lower side of the seat pan.

9. Universal motor car seat as set forth in claims 1 and 5 **characterised in that** the seat seat shell (400) is adjustably pivoted on 4 rollers (623), and in that, for the bearing of the rollers, the lower transversal axis (396) of the back supporting yoke (394, 395, 396) and an additional front transversal axis (622) are effectively installed, being the two transversal axes pivoted in the peripheral walls (625) of the seat shell, which are upwardly extended on the sides, whereas the rollers are mounted in a loosely rotatable manner on the outwardly projecting ends of the transversal axis.

10. Universal motor car seat as set forth in claims 5 and 9 **characterised in that** for the positioning of the seat shell (400) in its respective longitudinal position a two-arm jack (614) is provided, which is loosely gimballed around the lower transversal axis (396) of the back supporting yoke (394, 395, 396) and the swivelling end of which points into the opposite travel direction and is provided with a downwardly projecting jack tooth which, by means of a bolt spring that is articulated at the opposite swivelling arm of the jack and suspended with its upper end on the upwardly extended back wall of the seat shell (400) which is angled towards the front, is engaged with a rack (618) that is firmly affixed below the bottom plate of the seat shell, and in that for the operation of the jack a control lever (627) is provided which is led towards the outside through a slot that is vertically integrated into the back wall of the seat shell.

11. Universal motor car seat as set forth in claims 5 and 9 **characterised in that** on each peripheral side of the seat shell (400) a guide casing (608 or 609) provided with a lower attachment flange is affixed on a firmly mounted guide rail (626) provided for the ropel pulleys (623) of the seat shell, being the upper side of each guide casing developed as pan (635) provided with an inserted lateral seat cushion (610 or 611), and in that the guide casings are provided with laterally projecting walls that are just barely extended beyond the ropel pulleys and the upwardly and laterally extended peripheral walls (625) of the seat shell, and in that the laterally projecting walls of the guide casings are at the front of these guide casings downwardly extended, so that a stop against the ropel pulleys or against a front and a back stop is developed for the movability of the seat shell and that the guide casings form a cam surface for the ropel pulleys with each peripheral side of their attachment flanges which are directed towards the ropel pulleys.

12. Universal motor car seat as set forth in at least one of the above claims **characterised in that** a motor car seat intended for a passenger is provided with a back rest designed with a back pan (607) capable of being swung out and pivoted on the lower transversal axis (416 or 416a) of the back rest, being inserted into the back pan a lower back cushion (417) and being upwardly projecting bearing flanges for the bearing of a transversal axis (422) integrated into the peripheral sides of the back pan, and in that a trip shoulder (630) is integrated below a bearing pivot, which is provided for the bearing of the back pan, and that the stop face of the said trip shoulder against the trip dogs (632) provided on both sides as parts of the laterally affixed back pans (600 or 601) or laterally affixed back parts (388) are mounted in such a way that the inclination of the back pan, when downwardly tilted into the swivelling position where it has reached the buffer, corresponds to the angle of inclination of the swivelling position of the children's seat plate (427) when used as a lying surface, and in that on the back side of the lower back pan a headrest pad (628) is attached the upper headrest surface of which develops one single surface in combination with the surface of a children's seat cushion (406) affixed on the children's seat plate (427) when the seat shell (400) is brought into its backmost position at the buffer, being the headrest pad, which is downwardly bevelled towards and positioned next to the children's seat cushion so that a direct connecting line is formed which is upwardly extended towards the back.

13. Universal motor car seat as set forth in at least one of the above claims **characterised in that** a motor car seat intended for a passenger is provided with a back rest designed with an upper back pan (424) which is firmly mounted at the lateral back pans (600 or 601) or at the lateral back parts (388), being an upper backrest pad (606) inserted into the back pan and being, on the back side, angled bars integrated into the bottom plate of the back pan on the peripheral sides of the said bottom plate, and that the inwardly drawn angle sides of these angled bars, together with the bottom plate, develop inwardly directed guide grooves (419) on both sides, and in that at their lower end the guide grooves are developed as a stop and that they are designed with an upwardly directed opening at their upper end, being the inwardly drawn angle sides of the angled bars or the guide grooves upwardly limited and designed on the back side in such a way that they are provided with outwardly projecting attachment collars (619) for the attachment of the back pans.

14. Universal motor car seat as set forth in claims 12 and 13 **characterised in that** a motor car seat intended for a passenger is provided with a table plate (418) which is upwardly extended and developed in a sloped manner towards the back, being the table plate disengageably gimballed with its lower end around the transversal axis (422) of the lower back pan (607) and provided with a laterally projecting transversal axis (423) or laterally projecting trunnion (423) at its upper end, by means of which the table plate is adjustably guided in the guide grooves (419) of the upper back pan (424), and in that leaf springs (430) are affixed on the peripheral sides of the inwardly drawn angle sides of the guide grooves and that, reaching beyond the upwardly limited angle sides, these leaf springs project into the grooves and are designed in such a way that an indexed position and a trip position for the laterally projecting transversal axis or for the laterally projecting trunnions of the table plate are developed on both sides.

15. Universal motor car seat as set forth in at least one of the above claims **characterised in that** a motor car seat intended for each passenger is provided with a back rest with a gimballed head rest (436 or 436a), being the head rest pivoted at a tube (369) or a transversal axis (613) of the back rest, and in that the tube forms the upper transversal axis of a front seat back rest, whereas the transversal axis develops the upper transversal axis of a back seat back rest.

16. Universal motor car seat as set forth in claims 12 and 15, **characterised in that** a back rest for a back seat bench is provided with lateral back pans (600 or 601) into which lateral back cushions (603 or 604) are inserted, and in that each lateral back pan is provided with a lower bearing pivot in order to form the bearing of the lower transversal axis (416a) for the swivel bearing of the lower back pan (607) and with an upper bearing pivot in order to form the bearing of the upper transversal axis (613) for the swivel bearing of the head rest (436a).

17. Universal motor car seat as set forth in claims 12 and 15, **characterised in that** a back rest for a front seat is provided with lateral back parts (388) on which lateral back cushions (605) are mounted, and in that each lateral back part is provided with a lower bearing pivot in order to form the bearing of the lower transversal axis (416) for the swivel bearing of the lower back pan (607) and with an upper bearing pivot in order to form the bearing of the tube (369) for the swivel bearing of the head rest (436).

18. Universal motor car seat as set forth in claims 12 and 15, **characterised in that** into each back side of the bearing pivots of a lateral back pan (600 or 601) as well as of a lateral back part (388) an attachment calk (629) is integrated for the attachment of a back wall (425a or 425), being integrated into each lower attachment calk an outwardly projecting trip dog (632) directed towards the centre of the seat and against the trip shoulder (630) of a lower back pan (607).

**Revendications**

1. Siège universel de véhicule automobile pour occupants petits et adultes notamment passagers, avec une cuvette de siège pivotable vers le haut dans le sens de la marche dans laquelle est placé un rembourrage de siège et dont le côté inférieur est pourvu d'un dos de siège à enfants rembourré de sorte que la cuvette de siège forme une surface d'appui confortable, également quand elle est utilisée comme dos à enfants **et caracterisé en ce qu'** une cuvette de siège (392) est logée à un axe transversal supérieur (395) d'un étrier-support (394, 395, 396) composé de deux axes transversaux (395 et 396) et de deux supports (394), et en ce que la cuvette de siège est pourvue de surfaces de butée (428) contre les supports (394) de l'étrier-support disposées sur les deux côtés de son côté avant, l'étrier-support lui-même étant logé de manière pivotable avec son axe transversal inférieur (396) dans un carter de siège (400).

2. Siège universel de véhicule automobile selon la revendication 1, **caracterisé en ce qu'** une surface de butée (429) contre les deux supports (394) de l'étrier-support (394, 395, 396) est intégrée dans le carter de siège (400), la surface de butée étant disposée de sorte que, partant de sa position de pivotement en butée, l'étrier-support, avec son axe transversal supérieur (395), est logé dans le carter de siège (400) de manière pivotable vers le haut en sens inverse de la marche autour de son axe transversal inférieur (396).

3. Siège universel de véhicule automobile selon les revendications 1 et 2, **caracterisé en ce que** la cuvette de siège (392) est constituée par une plaque de base dont les côtés latéraux et le côté arrière présentent des parois tirées vers le haut tandis que, conformément aux surfaces de butée (428) prévues pour son arrêt, le côté avant de ladite plaque de base est tiré cylindriquement autour de l'axe transversal supérieur (395) de l'étrier-support (394, 395, 396) et forme un angle vers le haut et une arête avant, l'arête avant qui forme un angle vers le bas étant également tirée cylindriquement autour de l'axe transversal et tirée un peu vers l'intérieur, et la paroi avant de la cuvette de siège ainsi créée, qui présente une forme cylindrique, étant creuse au niveau des supports (394) de l'étrier-support ou bien tirée un peu vers l'intérieur, et en ce que sur les côtés extérieurs de cette partie des brides de logement (393) permettant le logement pivotable de la cuvette de siège autour de l'axe transversal supérieur de l'étrier-support sont intégrées dans le côté inférieur de la plaque de base, et en ce que les surfaces de butée (428) sont disposées de sorte que la cuvette de siège se trouve dans une position de pivotement en utilisation en tant que dos quand l'étrier-support se trouve dans la position de pivotement en butée déterminée par la surface de butée (429) du carter de siège (400).

4. Siège universel de véhicule automobile selon les revendications 1 à 3, **caracterisé en ce que** les supports (394) de l'étrier-support (394, 395, 396) sont disposés à l'intérieur des brides de logement latérales (393) de la cuvette de siège (392), et en ce qu'un des deux supports est logé axialement déplaçable vers les axes transversaux de l'étrier-support, ledit support étant pourvu d'un boulon d'arrêt (397) écarté axialement vers l'extérieur et, avec son boulon d'arrêt, étant pressé vers l'extérieur contre la bride de logement respective de la cuvette de siège, tout ceci par l'intermédiaire d'un ressort de pression (399) fixé de manière efficace à l'axe transversal inférieur (396) de l'étrier-support, et en ce que ladite bride de logement est pourvue de creux correspondants sur son côté intérieur conçus et disposés de sorte que le boulon d'arrêt puisse s'enclencher au moins quand la cuvette de siège se trouve en position de pivotement en utilisation en tant que dos ainsi qu'en position verticale, et en ce qu'entre le support logé axialement déplaçable et la bride de logement respective, on prévoit la disposition d'une butée fixe efficace seulement dans un sens de pivotement, évitant un rabattement-retour non voulu de la cuvette en sa position de pivotement en siège, mais capable d'être déclenchée de la manière connue en déplaçant l'étrier vers l'intérieur.

5. Siège universel de véhicule automobile selon les revendications 1 à 4, **caracterisé en ce que** le carter de siège (400) est pourvu d'une plaque de base disposée de manière horizontale, un panneau arrière tiré vers le haut en partant de la plaque de base qui forme un angle vers l'avant et qui est tiré cylindriquement autour de la bride de logement (393) de la cuvette de siège (392), formant un angle vers le bas à son bout avant et ledit bout avant formant la surface de butée (429) contre les supports (394) de l'étrier-support (394, 395, 396), et en ce que les parois (625) sur les côtés extérieurs du carter de siège sont tirées vers le haut tandis que la paroi de fermeture avant du carter est constituée par un creux conçu en forme de V avec des branches écartées vers le bas, ledit creux étant intégré dans la plaque de base par le côté inférieur.

6. Siège universel de véhicule automobile selon les revendications 1 à 5, **caracterisé en ce que** les deux côtés du revers d'une plaque de siège à enfants (427) sont pourvus d'éclisses de logement (413) tirées obliquement vers l'arrière, et en ce que ladite plaque de siège à enfants est logée de manière pivotable par l'intermédiaire desdites éclisses de logement sur l'axe transversal supérieur (395) de l'étrier-support (394, 395, 396), le revers de la plaque de siège à enfants ainsi que des éclisses de logement présentant une surface de butée contre les surfaces de butée (428 et 429) de la cuvette de siège (392) et du carter de siège (400) quand la plaque de siège à enfants se trouve dans une position de pivotement inférieure de sécurité.

7. Siège universel de véhicule automobile selon les revendications 2, 5 et 6, **caracterisé en ce que** l'axe transversal supérieur (403) d'un étrier-support (402, 403, 404) composé de deux axes transversaux (403 et 404) et de deux supports (402) est logé de manière pivotable au côté inférieur avant de la plaque de siège à enfants (427) et forme un étrier-support avant pour la plaque de siège à enfants, en pouvant placer l'axe transversal inférieur (404) de l'étrier-support dans des crans (431) disposés sur les deux côtés du carter de siège (400), et en ce que l'on prévoit la disposition de deux paires de cames dont une paire de cames arrière, permettant la position de pivotement en siège de la plaque de siège à enfants, est fixée de sorte que l'étrier-support avant de la plaque de siège à enfants présente environ la même position oblique que l'étrier-support arrière (394, 395, 396) quand il se trouve en position de pivotement en butée tandis qu'une paire de cames avant est disposée de sorte que l'on puisse mettre la plaque de siège à enfants dans une position de pivotement en couchette un peu plus plate.

8. Siège universel de véhicule automobile selon les revendications 1, 5 et 7, **caracterisé en ce que** les crans (431) pour l'axe transversal inférieur (404) de l'étrier-support avant (402, 403, 404) disposés sur les deux côtés du carter de siège (400) sont intégrés dans des parties de base extérieures du carter de siège qui montent obliquement vers l'avant, les côtés supérieurs des parties de base tirées vers le haut formant des surfaces de butée (426) contre le côté inférieur de la cuvette de siège (392) quand elle se trouve en position de pivotement comme siège, et en ce que les surfaces de butée se trouvant sur le côté intérieur et la partie extérieure du dos à enfants conçu un peu plus étroit et fixé au côté inférieur de la cuvette de siège sont étagées vers le bas de sorte que le dos de siège à enfants ne repose pas sur la surface dessous.

9. Siège universel de voiture automobile selon les revendications 1 et 5, **caracterisé en ce que** le carter de siège (400) est logé de manière déplaçable sur 4 rouleaux (623), et en ce que pour permettre le logement des rouleaux on prévoit l'utilisation de l'axe transversal inférieur (396) de l'étrier-support arrière (394, 395, 396) et un axe transversal avant supplémentaire (622), les deux axes transversaux étant logés dans les parois extérieures (625) du carter de siège tirées latéralement vers le haut tandis que les rouleaux sont fixés sur les bouts écartés vers l'extérieur de l'axe transversal de manière à ne pas être gênés dans leur mouvement.

10. Siège universel de voiture automobile selon les revendications 5 et 9, **caracterisé en ce que** pour arrêter le carter de siège (400) dans sa position longitudinale respective, on prévoit l'installation d'un cliquet logé de manière librement pivotable autour de l'axe transversal inférieur (396) de l'étrier-support arrière (394, 395, 396), c'est-à-dire un cliquet avec deux bras (614) dont le bout de pivotement qui se dirige en sens inverse de la marche est pourvu d'une dent écartée vers le bas qui est raccordée par engrènement avec une crémaillère (618) fermement fixée au-dessous de la plaque de base du carter de siège par l'intermédiaire d'un ressort de traction fixé de manière articulée sur l'autre bras pivotable du cliquet et suspendu avec son bout supérieur au panneau arrière du carter de siège (400) tiré vers le haut et formant un angle vers l'avant, et en ce que, pour actionner le cliquet, on prévoit l'installation d'un levier de manoeuvre (627), guidé vers l'extérieur à travers une rainure disposée de manière verticale au panneau arrière du carter de siège.

11. Siège universel de voiture automobile selon les revendications 5 et 9, **caracterisé en ce que** sur chaque côté extérieur du carter de siège (400), un chevalet de guidage (608 ou 609) pourvu d'une bride de fixation inférieure est fixé à un rail de roulement (626) fermement fixé, prévu pour les galets de roulement (623) du carter de siège, les côtés supérieurs des chevalets de guidage étant conçus en forme de cuvettes (635) dans lesquelles sont placées des rembourrages de siège latéraux (610 ou 611), et en ce que les chevalets de guidage sont pourvus de parois écartées latéralement, passant un peu sur les galets de roulement et les parois extérieures du carter de siège tirées latéralement vers le haut (625), et en ce que les parois des chevalets de guidage écartées latéralement sont tirées vers le bas aux côtés frontaux desdits chevalets de guidage, de sorte qu'elles forment un arrêt contre les galets de roulement ou bien un arrêt avant et arrière pour pouvoir déplacer le carter de siège, et en ce que chaque chevalet de guidage forme une surface d'arrêt pour les galets de roulement par l'intermédiaire des côtés extérieurs de ses brides de fixation qui se dirigent vers les galets de roulement.

12. Siège universel de voiture automobile selon au moins une des revendications citées ci-dessus, **caractérisé en ce qu'** un siège de voiture prévu pour un passager est pourvu d'un dos avec une cuvette de dos (607) logée à un axe transversal inférieur (416 ou 416a) du dos de manière qu'on puisse la faire pivoter, un rembourrage de dos inférieur (417) étant placé dans la cuvette de dos, et des brides de logement écartées vers le haut, permettant le logement d'un axe transversal (422), étant intégrées aux côtés extérieurs de la cuvette de dos, et en ce qu'au-dessous d'un bossage de palier prévu pour le logement de la cuvette de dos, on prévoit l'intégration d'un listel d'arrêt (630) dont les surfaces de butée contre des cames de butée (632) qui sont prévues sur les deux côtés de cuvettes de dos (600 ou 601) ou bien de pièces de dos (388) fixées latéralement sont fixées de sorte que l'inclinaison de la cuvette de dos, quand elle se trouve en position de pivotement en butée rabattue corresponde à l'angle d'inclinaison de la plaque de siège à enfants (427) quand celle-ci se trouve dans sa position de pivotement en couchette, et en ce qu'au revers de la cuvette de dos inférieure, on prévoit la fixation d'un rembourrage de tête (628) dont la surface d'appui supérieure pour la tête forme un seul et même plan avec la partie supérieure d'un rembourrage de siège à enfants (406) fixé à la plaque de siège à enfants (427) quand le carter de siège (400) se trouve en position de butée arrière, le rembourrage de tête étant chanfreiné vers le bas et vers le rembourrage de siège à enfants qui confine au rembourrage de tête, de sorte que l'on réalise un passage graduel qui monte légèrement vers l'arrière.

13. Siège universel de voiture automobile selon au moins une des revendications citée ci-dessus, **caractérisé en ce qu'** un siège de voiture prévu pour un passager est pourvu d'un dos avec une cuvette de dos supérieure (424) fermement montée aux cuvettes de dos (600 ou 601) ou bien parties de dos latérales (388), un rembourrage de dos supérieur (606) étant placé dans ladite cuvette de dos et des listels angulaires étant intégrés aux côtés extérieurs d'une plaque de base se trouvant au revers de la cuvette de dos, c'est-à-dire des listels angulaires dont les branches tirées vers l'intérieur ensemble avec la plaque de base ont la fonction de rainures de guidage (419) dirigées vers l'intérieur, se trouvant sur les deux côtés de celle-ci, et en ce que les bouts inférieurs des rainures de guidage ont la fonction d'une butée et sont ouverts vers le haut, les branches tirées vers l'intérieur des listels angulaires ou bien des rainures de guidage étant limitées vers le haut et, au revers, pourvues d'éclisses de fixation (619) écartées vers l'extérieur pour permettre la fixation de la cuvette de dos.

14. Siège universel de voiture automobile selon au moins une des revendications citées ci-dessus, **caractérisé en ce qu'** un siège de voiture prévu pour un passager est pourvu d'une planche de table (418) qui monte obliquement vers l'arrière, le bout inférieur de la planche de table étant logé de manière pivotable et déclenchable à l'axe transversal (422) de la cuvette de dos inférieure (607) et le bout supérieur de ladite planche de table étant pourvu d'un axe transversal (423) ou bien d'un tenon, tous deux écartés latéralement (423), par l'intermédiaire desquels la planche de table est guidée de manière déplaçable dans les rainures de guidage (419) de la cuvette de dos supérieure (424), et en ce que des ressorts à lames (430) sont fixés aux côtés extérieurs des branches des rainures de guidage tirées vers l'intérieur, c'est-à-dire des ressorts à lames qui passent sur les branches limitées vers le haut avançant jusqu'aux rainures et qui sont conçus de sorte qu'ils permettent une position de crantage et une position en butée de l'axe transversal ou bien du tenon écartés latéralement de la planche de table.

15. Siège universel de voiture automobile selon au moins une des revendications citées ci-dessus, **caracterisé en ce qu'** un siège de voiture prévu pour chaque passager est pourvu d'un dos avec un repose-tête (436 ou 436a) logé de manière pivotable, le repose-tête étant logé à un tube (369) ou à un axe transversal (613) du dos, et en ce que le tube a la fonction d'un axe transversal supérieur d'un dos de siège avant tandis que l'axe transversal a la fonction de l'axe transversal d'un dos de siège arrière.

16. Siège universel de voiture automobile selon les revendications 12 et 15, **caracterisé en ce qu'** un dos pour un banc de siège arrière est pourvu de cuvettes de dos latérales (600 ou 601) dans lesquelles sont placés des rembourrages de dos latéraux (603 ou 604), et en ce que les cuvettes de dos latérales sont pourvues respectivement d'un bossage de palier inférieur permettant le logement de l'axe transversal inférieur (416a) pour le logement pivotable de la cuvette de dos inférieure (607) et d'un bossage de palier supérieur permettant le logement de l'axe transversal supérieur (613) pour le logement pivotable du repose-tête (436a).

17. Siège universel de voiture automobile selon les revendications 12 et 15, **caracterisé en ce qu'** un dos pour un siège avant est pourvu de parties de dos latérales (388) sur lesquelles sont montées des rembourrages de dos latéraux (605), et en ce que les parties de dos latérales sont pourvues respectivement d'un bossage de palier inférieur permettant le logement de l'axe transversal inférieur (416) pour le logement pivotable de la cuvette de dos inférieure (607) et d'un bossage de palier supérieur permettant le logement du tube (369) pour le logement pivotable du repose-tête (436).

18. Siège universel de voiture automobile selon les revendications 12, 16 et 17, **caracterisé en ce qu'** un saumon de fixation (629) permettant la fixation d'un panneau arrière (425a ou 425) est intégré aux revers des bossages de palier de chaque cuvette de dos (600 ou 601) et partie de dos latérales (388), une came de butée (632) écartée vers l'extérieur qui se dirige vers le milieu du siège et contre le listel d'arrêt (630) d'une cuvette de dos inférieure (607) étant intégrée à chaque saumon de fixation inférieur.

Fig.7, Fig.8, Fig.9, Fig.10, Fig.11, Fig.12, Fig.13, Fig.14